(19) Europäisches Patentamt
European Patent Office
Office européen des brevets

(11) **EP 4 671 224 A1**

(12) **DEMANDE DE BREVET EUROPEEN**

(43) Date de publication:
**31.12.2025 Bulletin 2026/01**

(21) Numéro de dépôt: **25186087.0**

(22) Date de dépôt: **27.06.2025**

(51) Classification Internationale des Brevets (IPC):
***C04B 28/04*** $^{(2006.01)}$ ***C04B 40/00*** $^{(2006.01)}$

(52) Classification Coopérative des Brevets (CPC):
(C-Sets disponibles)
**C04B 40/0039; C04B 28/04** (Cont.)

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **27.06.2024 FR 2407003**

(71) Demandeur: **Materrup**
**40230 Saint-Geours-de-Maremne (FR)**

(72) Inventeurs:
- **Neuville, Mathieu**
  **40140 Soustons (FR)**
- **Mercé, Manuel**
  **40230 Saint Vincent de Tyrosse (FR)**

(74) Mandataire: **A.P.I. Conseil**
**Technopôle Hélioparc**
**4, rue Jules Ferry**
**64000 Pau (FR)**

(54) **COMPOSITION POUR LIANT DE CONSTRUCTION, SYSTEME ET PROCEDE ASSOCIES**

(57) L'invention concerne une composition pour liant de construction comportant une matrice argileuse crue et un polymère défloculant comportant des monomères contenant un noyau mélamine, ledit polymère défloculant présentant une chaîne principale comportant des noyaux mélamine liés entre eux par des liaisons covalentes. L'invention concerne un liant de construction et un matériau de construction formé à partir de cette composition.

[Fig. 1]

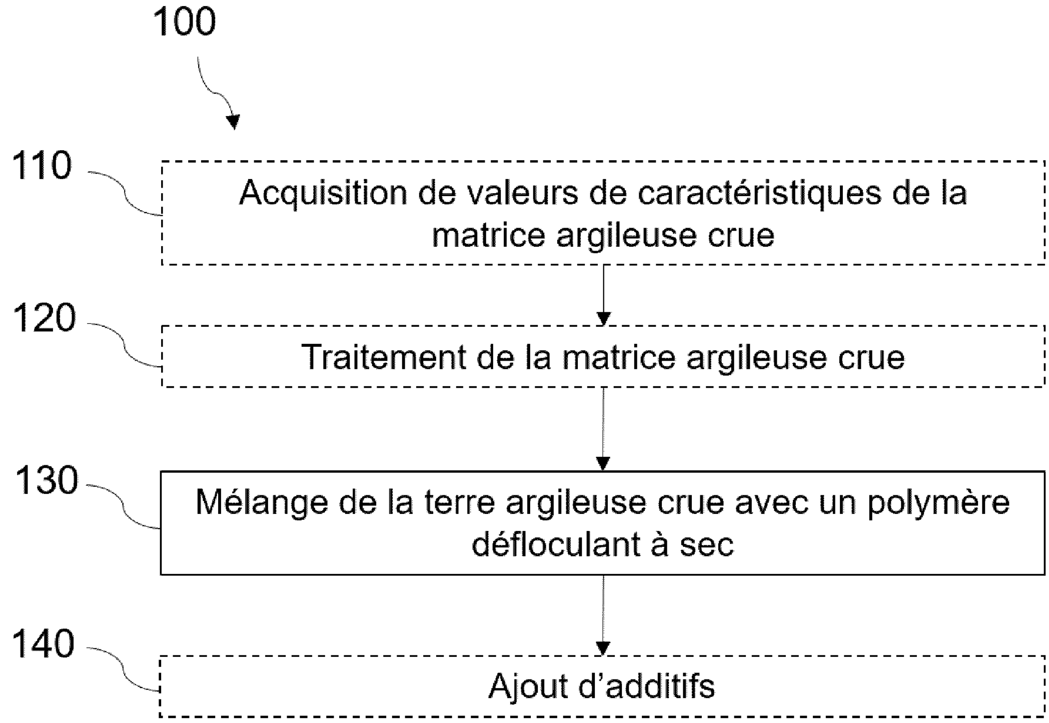


EP 4 671 224 A1

(52) Classification Coopérative des Brevets (CPC):
(Cont.)

C-Sets
**C04B 28/04, C04B 14/104, C04B 14/106,**
**C04B 18/141, C04B 24/223;**
**C04B 40/0039, C04B 14/10, C04B 24/223**

## Description

### Domaine technique

L'invention concerne le domaine de la construction et plus particulièrement celui des matériaux de construction et liants de construction. En particulier, elle concerne une nouvelle composition pour liant de construction.

### Technique antérieure

En 2022, le ciment était la deuxième ressource la plus consommée au monde, avec plus de 4 milliards de tonnes produites chaque année dans le monde. Cette consommation est en constante augmentation, portée par la demande croissante de logements et d'infrastructures. Le ciment est notamment utilisé pour la fabrication d'éléments de maçonnerie qui reposent sur des matériaux cimentaires en tant que liants. Le ciment utilisé dans le domaine de la construction est généralement un ciment Portland. C'est un liant hydraulique qui, mélangé à de l'eau, durcit et prend en masse. Après durcissement, le ciment conserve sa résistance ainsi que sa stabilité et cela même exposé à l'eau.

En raison du développement constant de nouvelles infrastructures dans la plupart des pays du monde, il existe une demande permanente pour l'approvisionnement en liants de construction, plus particulièrement des matières premières pour la formation de ciment Portland. Cependant, la production et l'utilisation du ciment Portland est associée à une empreinte environnementale élevée. Ainsi, l'industrie du ciment génère environ 8% des émissions mondiales de $CO_2$. En effet, il est estimé que la fabrication d'un liant de construction de type Portland génère en moyenne 0,8 kg de $CO_2$ par kg de clinker de ciment Portland produit.

Différentes solutions ont donc été développées pour tenter de remplacer au moins partiellement certains composants des liants de construction utilisés pour la formation des ciments de type Portland. Ces solutions visent principalement à réduire l'empreinte carbone. Dans le cadre du développement de ces solutions, l'argile a été évitée dans les liants de construction ou même les matériaux de construction jusqu'à récemment car de faibles concentrations suffisaient à interagir négativement avec des superplastifiants tels que les PCE (Polycarboxylate) utilisés dans les bétons. Ainsi, dans le béton, les argiles brutes ont été longtemps considérées comme une impureté apportée par exemple par les granulats (e.g. sable). Une faible teneur en argile inhibe l'effet des plastifiants et superplastifiants et a un impact négatif sur la demande en eau du béton. Cela induit une forte augmentation de la quantité d'eau nécessaire pour obtenir un écoulement donné, aboutissant à une perte de performance mécaniques sur produit durci.

Toutefois, il a été découvert que, une fois calcinées, les argiles ont des propriétés pouzzolaniques et peuvent également être utilisées comme matériau cimentaire complémentaire. Dans le but de réduire même légèrement l'empreinte carbone, il a été développé des matériaux de construction avec de l'argile calcinée. Cette argile calcinée n'entraine généralement que peu d'interaction négative avec les superplastifiants les plus utilisés dont le PCE. Les argiles calcinées sont généralement fabriquées par un traitement à haute température allant de 450 à 950°C, ce qui entraîne une déshydroxylation ou même un effondrement structurel partiel du minéral argileux. Au cours des dernières années, les ciments argilo-calcaires (LC3) ont été considérés comme l'un des ciments à faible émission de $CO_2$ les plus prometteurs. Ces ciments ternaires permettent de réduire la teneur en clinker jusqu'à 50% tout en atteignant une résistance équivalente au ciment Portland à 7 jours en utilisant du métakaolin en faible teneur. Cependant, la présence d'argiles calcinées augmente la demande en eau des ciments composés et, en général, des dosages plus élevés de PCE sont nécessaires que dans les ciments Portland. En outre, la calcination de l'argile, qu'elle soit à basse température ou à haute température, flash ou longue, entraine une consommation d'énergie venant alourdir l'empreinte carbone du matériau de construction (e.g. béton) la comportant.

Alors qu'il était établi que la présence d'argile crue dans un béton était préjudiciable, il a été montré récemment que la préparation de liant de construction à partir d'argile crue, ajoutée avant même l'ajout de charges, pouvait permettre la génération de matériaux de construction présentant des niveaux élevés de résistance mécanique (WO22157209, EP3932886, WO20178538, WO20141285).

Depuis, de nouveaux matériaux comportant une quantité significative d'argile crue sont en cours de développement et permettent d'atteindre des empreintes carbones largement réduites.

Toutefois, face aux enjeux climatiques, il est nécessaire d'améliorer encore les performances mécaniques des matériaux de construction intégrant de l'argile crue. En outre, il existe un besoin pour de nouvelles solutions permettant de générer des matériaux de construction à base d'argile crue présentant des propriétés mécaniques améliorées et cela même à partir de matrice argileuses crues réputées difficiles pour de multiples raisons : hétérogénéité, composition, procédé industriel associé, etc.

### Résumé de l'invention

L'invention vise à pallier ces inconvénients. Ce qui suit présente un résumé simplifié d'aspects, de modes de

réalisation et d'exemples sélectionnés de la présente invention dans le but de fournir une compréhension de base de l'invention. Toutefois, le résumé de l'invention ne constitue pas un aperçu exhaustif de tous les aspects, modes de réalisation et exemples de l'invention. Le seul but du résumé est de présenter des aspects, des modes de réalisation et des exemples sélectionnés de l'invention sous une forme concise en guise d'introduction à la description plus détaillée des aspects, des modes de réalisation et des exemples de l'invention qui suivent le résumé.

L'invention concerne en particulier une composition pour liant de construction comportant une matrice argileuse crue et un polymère défloculant comportant des monomères contenant un noyau mélamine, ledit polymère défloculant présentant une chaîne principale comportant des noyaux mélamine liés entre eux par des liaisons covalentes. De préférence, le polymère défloculant présente une masse moléculaire d'au moins 2 000 g/mol.

La demanderesse a développé une nouvelle solution comportant l'utilisation d'une matrice argileuse crue avec une faible concentration en polymère défloculant comportant des monomères contenant un noyau mélamine. En effet, l'utilisation de ce type de polymère défloculant permet de beaucoup mieux gérer la demande en eau d'un liant utilisant une matrice argileuse crue et donc même à de faibles concentrations permet d'atteindre de meilleures valeurs de performances mécaniques.

En outre, comme cela est détaillé dans la suite, une composition selon l'invention peut permettre de réduire le retrait et les risques de fissure d'un matériau de construction formé à partir de cette composition.

Aussi, certaines compositions peuvent permettre d'augmenter la Rc à jeune âge (e.g. 1j). Enfin, alors qu'il est connu qu'une faible teneur en argile inhibe l'effet des plastifiants et superplastifiants et à un impact négatif sur la demande en eau du béton, dans la présente invention au contraire, la combinaison d'argile non calcinée avec certains polymères défloculants selon l'invention permet de réduire la demande en eau.

Selon d'autres caractéristiques optionnelles de la composition pour liant de construction selon l'invention, elle peut inclure facultativement une ou plusieurs des caractéristiques suivantes, seules ou en combinaison :

- Elle comporte au moins 10 % en poids sec de matrice argileuse crue par rapport au poids sec de la composition. De préférence, elle comporte au moins 20 %, de préférence au moins 30%, de façon plus préférée au moins 40%, de façon plus préférée au moins 95% en poids sec de matrice argileuse crue par rapport au poids sec de la composition.
- Elle comporte au plus 5 %, de préférence au plus 3 %, en poids dudit polymère défloculant comportant des monomères contenant un noyau mélamine, par rapport au poids sec de la matrice argileuse crue,
- le polymère défloculant comporte des groupements sulfonate, de préférence des noyaux mélamine étant substitués par un ou plusieurs groupements sulfonate. Cela est particulièrement avantageux lors de l'utilisation avec des matrices argileuses crues réputées difficiles. En effet, les noyaux mélamine dans le polymère défloculant selon l'invention sont susceptibles d'être fonctionnalisés, permettant l'introduction de groupes fonctionnels variés qui modifient les propriétés physico-chimiques du polymère. Cette fonctionnalisation peut intervenir soit directement sur les noyaux mélamine avant leur polymérisation, soit sur le polymère déjà formé, en exploitant les sites réactifs restants.
- la matrice argileuse crue présente une valeur de LOI supérieure ou égale à 8 %. En effet, un polymère défloculant selon l'invention, comportant des groupements mélamine formant au moins une partie de la chaine principale est particulièrement efficace sur ce type de matrice argileuse crue.
- la matrice argileuse crue présente une quantité de CaO supérieure ou égale à 2 %, de préférence par rapport au poids sec de la matrice argileuse crue. En effet, un polymère défloculant selon l'invention, comportant des groupements mélamine formant au moins une partie de la chaine principale est particulièrement efficace sur ce type de matrice argileuse crue.
- la matrice argileuse crue présente une quantité de $K_2O$ inférieure ou égale à 5 %, de préférence par rapport au poids sec de la matrice argileuse crue. En effet, un polymère défloculant selon l'invention, comportant des groupements mélamine formant au moins une partie de la chaine principale est particulièrement efficace sur ce type de matrice argileuse crue.
- la matrice argileuse crue présente une quantité de $Na_2O$ inférieure ou égale à 2 %, de préférence par rapport au poids sec de la matrice argileuse crue. En effet, un polymère défloculant selon l'invention, comportant des groupements mélamine formant au moins une partie de la chaine principale est particulièrement efficace sur ce type de matrice argileuse crue.
- la matrice argileuse crue présente une quantité de $SiO_2$ supérieure ou égale à 35 %, de préférence par rapport au poids sec de la matrice argileuse crue. En effet, un polymère défloculant selon l'invention, comportant des groupements mélamine formant au moins une partie de la chaine principale est particulièrement efficace sur ce type de matrice argileuse crue qui, en présence qu'une quantité importante de quartz, n'est généralement utilisée pour la formation de liant de construction.
- le polymère défloculant présente une masse moléculaire d'au moins 2 000 g/mol, de préférence au moins 9 000 g/mol, de façon plus préférée au moins 14 000 g/mol et de façon encore plus préférée d'au moins 22 000 g/mol. Ces poids moléculaires permettent d'atteindre des performances élevées.

- le polymère défloculant présente, à un pH supérieur ou égale à 8, au moins 3 groupements chargés, de préférence au moins 3 groupements anioniques, de façon préférée au moins 4 groupements anioniques, de façon plus préférée au moins 5 groupements anioniques et de façon encore plus préférée au moins 10 groupements anioniques. En effet, cela est particulièrement avantageux lors de l'utilisation avec des matrices argileuses crues réputées difficiles.
- le polymère défloculant présente un rapport masse moléculaire sur nombre de groupements anioniques inférieur ou égal à 2000, de préférence inférieur ou égal à 1800, de façon plus préférée inférieur ou égal à 1600 et de façon encore plus préférée inférieur ou égal à 1400. En effet, cela est particulièrement avantageux lors de l'utilisation avec des matrices argileuses crues.
- Le polymère défloculant présente un rapport masse moléculaire sur nombre de groupements anioniques supérieur ou égale à 200, de façon préféré supérieur ou égal à 220, de façon plus préférée supérieur ou égal à 240 et de façon encore plus préférée supérieur ou égal à 260. En effet, cela est particulièrement avantageux lors de l'utilisation avec des matrices argileuses crues.
- le polymère défloculant présente un indice de polydispersité inférieur à 5. En effet, cela est particulièrement avantageux lors de l'utilisation avec des matrices argileuses crues.
- le polymère défloculant comporte une ou plusieurs chaines poly(oxyéthylène) ou poly(oxypropylène), la ou les chaines poly(oxyéthylène) et poly(oxypropylène) présentant une masse moléculaire d'au moins 200 g/mol,
- le polymère défloculant comporte une ou plusieurs chaines latérales présentant au moins une insaturation, de préférence au moins deux insaturations. En effet, cela est particulièrement avantageux lors de l'utilisation avec des matrices argileuses crues. Alternativement ou en combinaison, le polymère défloculant comporte une ou plusieurs chaines latérales présentant au moins une ramification, de préférence au moins deux ramifications.
- le polymère défloculant présente un rapport entre un nombre de fonction sulfonate (par exemple porté par mélamine sulfonate) sur un nombre de chaines latérales non chargées d'au moins 2:1. En effet, cela est particulièrement avantageux lors de l'utilisation avec des matrices argileuses crues.
- Elle comporte plusieurs polymères défloculants. Elle comporte en outre des polymères sélectionnés parmi : polycarboxylate éther, polynaphtalène sulfonate, ou oxyde de polyéthylène.
- la matrice argileuse crue comporte au moins une espèce minérale sélectionnée parmi : Illite, Kaolinite, Smectite, Bentonite, Vermiculite, Chlorite, Montmorillonites, Muscovite, Halloysite, Sépiolite, et Attapulgite,
- la composition est à l'état sec, par exemple elle présente une teneur en eau inférieure ou égale à 5 %. En effet, une telle préparation de la composition pour liant à l'état facilite le processus de préparation du matériau de construction et augmente les performances.

**Selon un autre objet,** l'invention porte en outre sur un **liant de construction** susceptible d'être fabriqué à partir d'une composition selon l'invention. De préférence, un liant de construction fabriqué à partir d'une composition selon l'invention. De façon plus préférée, un liant de construction selon l'invention comporte une matrice argileuse crue et un polymère défloculant comportant des monomères contenant un noyau mélamine, ledit polymère défloculant présentant une chaîne principale comportant des noyaux mélamine liés entre eux par des liaisons covalentes.

Selon d'autres caractéristiques optionnelles un **liant de construction** selon l'invention, il peut inclure facultativement une ou plusieurs des caractéristiques suivantes, seules ou en combinaison :

- Il comporte en outre au moins 10 % en poids d'activateur(s), par rapport au poids sec de liant de construction ; et

- Il comporte en outre au moins 5 % en poids de précurseur(s), par rapport au poids sec de liant de construction.

**Selon un autre objet,** l'invention porte en outre sur un matériau de construction fabriqué à partir d'une composition selon l'invention ou d'un liant de construction selon l'invention.

**Selon un autre objet,** l'invention porte en outre sur un procédé de fabrication d'une composition pour liant de construction comportant une étape de mélange d'une matrice argileuse crue avec un polymère défloculant comportant des monomères contenant un noyau mélamine, ledit polymère défloculant présentant une chaîne principale comportant des noyaux mélamine liés entre eux par des liaisons covalentes. De préférence, le polymère défloculant présente une masse moléculaire d'au moins 2 000 g/mol.

**Brève description des dessins**

D'autres caractéristiques et avantages de l'invention seront mieux compris à la lecture de la description qui va suivre et en référence aux dessins annexés, donnés à titre illustratif et nullement limitatif.

[Fig. 1] représente une illustration schématique d'un procédé de fabrication d'une composition selon un mode de réalisation de la présente invention. Les étapes encadrées en pointillé sont facultatives.

[Fig. 2] représente une illustration schématique d'un procédé de fabrication d'un matériau de construction selon un mode de réalisation de la présente invention.

## Description des modes de réalisation

Ci-après, nous décrivons un résumé de l'invention et le vocabulaire associé, avant de présenter les inconvénients de l'art antérieur, puis enfin de montrer plus en détail comment l'invention y remédie.

Le terme « **liant** » ou « **liant de construction** » au sens de l'invention peut être compris comme une formulation permettant d'assurer l'agglomération de matériaux entre eux, notamment lors de la prise, puis du durcissement d'un matériau de construction. Ainsi, il permet en particulier d'assurer l'agglomération du sable et autres constituants du matériau de construction avec les constituants du liant. Le liant selon l'invention est en particulier un liant hydraulique, c'est-à-dire que le durcissement se fait au contact de l'eau.

L'expression « **matrice argileuse** », au sens de l'invention peut correspondre à un ou plusieurs matériaux rocheux à base de silicates hydratés ou d'aluminosilicates de structure lamellaire, ladite matrice argileuse étant composée de particules fines provenant en général de l'altération de silicates à charpente tridimensionnelle, tels que les feldspaths. Une matrice argileuse peut ainsi comporter un mélange de tels matériaux rocheux tels la kaolinite, de l'illite, de la smectite, de la bentonite, de la chlorite, de la vermiculite, ou leurs mélanges. En outre, une matrice argileuse peut comporter des limons.

Au sens de l'invention, l'expression « **matrice argileuse crue** », peut correspondre à une matrice argileuse n'ayant pas subi d'étape de calcination. Elle peut donc aussi être appelée matrice argileuse non calcinée. Par exemple, cela correspond à une matrice argileuse n'ayant pas subi une montée en température supérieure à 300°C, de préférence supérieure à 200°C et plus préférentiellement une température supérieure à 150°C. En effet, la matrice argileuse crue peut subir une étape de séchage par chauffage nécessitant une montée en température généralement sensiblement égale ou inférieure à 150°C mais pas d'étape de calcination. Une matrice argileuse crue peut de préférence comporter un mélange de matériaux rocheux pouvant par exemple comporter de la kaolinite, de l'illite, de la smectite, micas tels que la muscovite, de la bentonite, de la chlorite, de la vermiculite, ou leurs mélanges, ainsi que des limons.

Dans la suite de la description, le terme « **% en poids** » en lien avec la composition pour liant, en lien avec le liant, ou bien en lien avec le matériau de construction, doit être compris comme étant une proportion par rapport au poids sec de la composition, du liant ou du matériau de construction respectivement. Le poids sec peut, par exemple, correspondre au poids avant l'addition d'eau par exemple nécessaire à la formation du matériau de construction. Lorsque les valeurs de % en poids sont données sous la forme d'intervalles, les bornes sont comprises sauf si le contraire est spécifié.

Au sens de l'invention, un « **défloculant** » peut correspondre à un composé capable de dissocier des agrégats et des colloïdes notamment en suspension aqueuse. Des agents défloculant ont par exemple été utilisés dans un contexte de forage ou d'extraction pétrolière pour rendre l'argile plus fluide et faciliter l'extraction ou le forage. Au sens de l'invention, l'expression « polymère défloculant » peut correspondre à un agent défloculant comportant au moins une répétition de monomère.

Le terme « **monomère** » correspond, au sens de l'invention, à une molécule ou un composé chimique qui peut s'assembler de manière répétitive pour former une structure polymérique plus grande.

Le terme « **polymère** » correspond, au sens de l'invention, à une macromolécule composée de nombreuses unités monomères identiques liées chimiquement les unes aux autres de manière répétée, formant ainsi une structure de grande taille et de poids moléculaire élevé. Par exemple, un polymère peut comporter au moins 10 monomères.

Au sens de l'invention, une « **chaine principale** », aussi désignée sous le terme de squelette peut correspondre à la séquence continue de liaisons covalentes reliant les monomères entre eux pour former le polymère. Cette structure linéaire ou parfois ramifiée constitue l'ossature d'un polymère, sur laquelle les différentes propriétés physiques, chimiques et mécaniques du matériau se fondent.

Au sens de l'invention, une « **chaine latérale** » d'un polymère peut correspondre aux groupes fonctionnels ou aux segments de polymère qui sont attachés à la chaîne principale, mais qui ne font pas partie intégrante de la séquence répétitive de monomères constituant le squelette principal. Ces chaînes latérales peuvent varier en longueur, en structure chimique, et en fonctionnalité.

Au sens de l'invention, l'expression « **noyau mélamine** » peut correspondre à un fragment moléculaire dérivé de la mélamine, un composé organique trimérique de formule brute $C_3H_6N_6$. Ainsi, un noyau mélamine comporte généralement un cycle triazine pouvant être substitué.

Au sens de l'invention, l'expression « **mélamine sulfonate** » peut correspondre à un dérivé fonctionnalisé de la mélamine où un ou plusieurs groupes sulfonates ($-SO_3-$) sont liés directement ou indirectement à l'azote des groupes amines de la molécule de mélamine.

Les termes « **groupement** », « **groupement fonctionnel** » ou « **groupement** chimique » correspond au sens de l'invention est un ensemble d'atomes liés dans une molécule qui confère des propriétés et des réactivités spécifiques à cette molécule.

Le terme « **groupement chargé négativement** » correspond au sens de l'invention à groupement comportant au moins un atome qui comporte au moins une charge négative due à la présence d'ions ou d'électrons supplémentaires.

Au sens de l'invention, l'expression « **masse molaire / moléculaire moyenne »** peut correspondre à une mesure statistique de la masse moyenne des molécules dans un échantillon d'un polymère. De préférence au sens de l'invention la masse moléculaire moyenne correspond à la masse moléculaire moyenne en poids (Mw). Elle est de préférence mesurée selon les indications de la norme ISO16014 :2019.

L'expression « **ciment Portland** » correspond à un liant hydraulique composé principalement de silicates de calcium hydraulique dont la prise et le durcissement est rendue possible par une réaction chimique avec de l'eau. Le ciment Portland contient généralement au moins 95% de clinker et au maximum 5% de constituants secondaires tels que des alcalis ($Na_2O$, $K_2O$), de la magnésie (MgO), du gypse ($CaSO_4 \cdot 2\ H_2O$) ou encore diverses traces de métaux. Par exemple, le ciment Portland peut se rapporter au CEM I.

Le terme « **clinker** » peut se rapporter à un constituant du ciment et provient de la cuisson d'un mélange composé de sensiblement 80 % de calcaire et 20 % d'aluminosilicates (tels que des argiles). Cette cuisson, la clinkérisation, se fait généralement à une température de plus de 1200°C, particulièrement énergivore et générant de fortes émissions de gaz à effet de serre. Le clinker est généralement moulu puis il peut être mélangé avec des laitiers de hauts-fourneaux afin de produire des ciments composés.

Le terme « **sable** » peut se rapporter à des particules, provenant de la désagrégation de roches, dont la dimension est comprise entre 0,063 mm et 2 mm.

Le terme « **limon** » peut se rapporter à des particules dont la taille des grains est intermédiaire entre les argiles et les sables (entre environ 2 et 50 micromètres).

Le terme « **D50** » correspond au diamètre médian pour lequel 50% (e.g en volume, en nombre ou en masse, de préférence en nombre) des grains, particules, granulats ou sédiments ont une taille inférieure à un diamètre donné. À titre d'exemple, une méthode d'analyse par tamisage et par sédimentométrie indique une D50 = 5,8 mm, alors 50 % des particules de l'échantillon (en nombre, en volume ou en masse, de préférence en masse) sont supérieures à 5,8 mm. D50 est généralement utilisé pour représenter la taille des particules d'un groupe de particules. La D50 est de préférence mesurée selon la norme ASTM D422-63 ou selon la norme ASTM D6913-04(2009) ou notamment pour les particules fines la norme ISO 13320:2020 (e.g. D10 ou <65 μm). Les expressions « propriété granulométrique » ou « profil granulométrique » ou « distribution de taille de particules » peuvent correspondre à des valeurs de paramètres relatifs à la distribution de taille de particules, par exemple dans la matrice argileuse crue ou dans les terres crues. Il existe de nombreux de paramètres relatifs à la distribution de taille de particules tel que la D50, D10, D90.

L'expression « **terre argileuse excavée** » correspond au sens de l'invention à une terre argileuse obtenue suite à une étape où le sol a été creusé par exemple au cours d'opérations de dragage de sédiments, de régalements et/ou de terrassements, en vue de construire, bâtir ou remblayer. En particulier, au sens de l'invention, la terre argileuse excavée peut être ou non déplacée hors du site d'excavation. De façon préférée et selon un avantage de l'invention, la terre excavée est utilisée sur le site d'excavation ou à une distance inférieure à 500 km, de préférence inférieure à 200 km, de façon plus préférée inférieure à 50 km. Ainsi, le procédé selon l'invention peut comporter une étape de prélèvement de terre crue et de transport de terre crue sur une distance inférieure à 500 km avant son utilisation dans le procédé. En outre, avantageusement, la terre argileuse excavée dans le cadre de l'invention est une terre argileuse excavée crue, c'est-à-dire qu'elle n'a pas subi d'étape de calcination. En particulier, c'est-à-dire qu'elle n'a fait l'objet d'aucun traitement thermique préalable. Par exemple, cela correspond à une terre argileuse n'ayant pas subi une montée en température supérieure à 300°C, de préférence supérieure à 200°C et plus préférentiellement une température supérieure à 150°C. En effet, la terre argileuse crue peut subir une étape de séchage nécessitant une montée en température généralement sensiblement égale à 150°C mais pas d'étape de calcination. Une étape de calcination peut par exemple correspondre à un traitement thermique à plus de 600°C pendant plusieurs secondes. Une terre argileuse excavée peut présenter différents profils granulométriques. Dans le cadre de l'invention, une terre argileuse excavée peut comporter des particules de taille supérieure à 2 μm, de préférence supérieure à 20 μm, de préférence supérieure à 50 μm et par exemple supérieure à 75 μm telle que déterminée selon la norme ASTM D422-63 ou la norme ASTM D6913-04(2009). De préférence, la terre argileuse excavée ne comporte pas de granulat de taille supérieure à 2 cm telle que déterminée selon la norme NF EN 933-1, de préférence pas de granulats de taille supérieure à 0,5 cm. Cette granulométrie peut notamment être évaluée après désagglomération et/ou broyage.

Le terme « **sensiblement égal »** au sens de l'invention correspond à une valeur variant de moins de 20 % par rapport à la valeur comparée, de préférence de moins de 10 %, de façon encore plus préférée de moins de 5 %.

Le domaine de la construction se doit d'évoluer pour optimiser sa productivité tout en répondant aux enjeux sociétaux et environnementaux. Les solutions existantes pour réduire l'empreinte environnementale des matériaux de construction les plus prometteuses se basent sur l'utilisation d'une matière première ayant une empreinte carbone basse à savoir l'argile crue. Toutefois, les liants de construction présentant une teneur en matrice argileuse crue significative peuvent présenter des propriétés mécaniques plus faible que les ciments portland. C'est particulièrement le cas lors de l'utilisation de certaines matrices argileuses.

De façon à maximiser l'utilisation de matrices argileuses crues et donc réduire au maximum l'empreinte environnementale du secteur de la construction, des matériaux de construction ayant des propriétés mécaniques élevées avec un maximum de matrices argileuses, les plus difficiles à valoriser. Face à ce constat, la demanderesse a développé une nouvelle solution permettant la fabrication de matériaux de construction à base de matrices argileuses crues notamment celles habituellement difficiles à valoriser.

Comme cela sera détaillé par la suite, la solution développée repose sur une utilisation combinée de matrice argileuse crue avec une famille particulière de polymère défloculant à savoir des polymères défloculants comportant des groupements mélamine, lesdits groupements mélamine formant au moins une partie de la chaine principale dudit polymère défloculant.

En outre, comme cela sera détaillé par la suite, les performances des matériaux de construction peuvent être encore améliorées par des sélections particulières au niveau des polymères défloculants utilisés.

Ainsi, selon **un premier aspect,** l'invention porte sur une **composition pour liant de construction.** Cette composition comporte en particulier une matrice argileuse crue et un polymère défloculant comportant des monomères contenant un noyau mélamine. Le polymère défloculant selon l'invention présente une chaîne principale comportant des noyaux mélamine liés entre eux par des liaisons covalentes ; autrement formulé, la chaine principale est formée d'une séquence répétitive où les noyaux mélamine sont liés entre eux par des liaisons covalentes. Comme cela a été mentionné et comme illustré dans les exemples, la composition selon l'invention présente l'avantage de permettre la formation de matériaux de construction à base d'une matrice argileuse crue présentant des performances mécaniques améliorées.

La composition selon l'invention comporte avantageusement au moins 10 % en poids sec de matrice argileuse crue par rapport au poids sec de la composition.

La composition selon l'invention peut être utilisée juste après sa formation pour la formation d'un liant de construction qui sera à son tour utilisé juste après sa formation pour former un matériau de construction. Alternativement, la composition selon l'invention peut être préparée à l'avance et même transportée avant son utilisation.

Avantageusement, la composition pour liant de construction selon l'invention est à l'état sec. C'est-à-dire qu'elle présente par exemple une teneur en eau inférieure ou égale à 5 %, de préférence inférieure ou égale à 2 %, de façon plus préférée inférieure ou égale à 1 %, de façon encore plus préférée inférieure ou égale à 0,1 %. L'humidité (teneur en eau) de la matrice argileuse peut être mesurée telle que décrit dans la norme ISO 12570:2000. Succinctement, la détermination du taux d'humidité est réalisée par séchage à chaud (analyse thermogravimétrique).

Ci-après seront détaillés des modes de réalisation préférés ou non des matières premières pouvant être mise en oeuvre dans le cadre de plusieurs aspects de la présente invention.

## Matrice argileuse crue

La matrice argileuse crue peut par exemple comporter au moins une espèce minérale sélectionnée parmi : Illite, Kaolinite, Smectite, Vermiculite, Chlorite, Montmorillonites, Muscovite, Halloysite, Sépiolite, et Palygorskite. Par exemple, la matrice argileuse crue peut par exemple comporter au moins 5%, de façon préférée au moins 15% et d'une façon encore plus préférée au moins 20 % en poids d'une espèce minérale sélectionnée parmi : Illite, Kaolinite, Smectite, Vermiculite, Chlorite, Montmorillonites, Muscovite, Halloysite, Sépiolite, et Palygorskite.

De façon préférée, la matrice argileuse crue comporte au moins deux types d'argiles sélectionnés parmi : Illite, Kaolinite, Smectite, Vermiculite, Chlorite, Montmorillonites, Muscovite, Halloysite, Sépiolite, Interstratifiés, Pyrophyllite, talcs, Serpentines et Palygorskite. Cela inclut les argiles dites interstratifiées qui sont des combinaisons complexes de plusieurs argiles. De façon encore plus préférée, la matrice argileuse crue comporte au moins une espèce minérale sélectionnée parmi : Kaolinite, Illite, Smectite, Palygorskite, Sépiolite, Chlorite, Montmorillonites, et Vermiculite.

Le tableau 1 ci-dessous présente les caractéristiques chimiques de ces espèces minérales.

[Tableau 1]

| | Type d'argile | Composition |
|---|---|---|
| Matrice Argileuse Crue | Illite | $(K, H_3O)(Al, Mg, Fe)_2(Si,Al)_4O_{10}[(OH)_2,(H_2O)]$ |
| | Smectite | $(Na,Ca)_{0,3}(Al,Mg)_2Si_4O_{10}(OH)_2$, n $H_2O$ |
| | Kaolinite | $Al_2Si_2O_5(OH)_4$ |
| | Bentonite | $(Na,Ca)_{0,3}(Al,Mg)_2Si_4O_{10}(OH)_2$ |
| | Vermiculite | $(Mg,Ca)_{0,7}(Mg,Fe,Al)_6(Al,Si)_8O_{22}(OH)_4$, n $H_2O$ |
| | Chlorite | $(Fe,Mg,Al)_6(Si,Al)_4O_{10}(OH)_8$ |
| | Muscovite | $KAl_2(AlSi_3O_{10})$ $(OH,F)_2$ |
| | Halloysite | $Al_2Si_2O_5(OH)_4$ |
| | Sépiolite | $Mg_4Si_6O_{15}(OH)_2$, n $H_2O$ |
| | Palygorskite | $(Mg,Al,Fe^{3+})_5[Si_8O_{20}](OH)_2$ $(OH2)_4$ n $H_2O$ |

Selon un mode préféré, une composition pour liant ou un liant de construction selon l'invention comporter au moins deux types d'argiles différents et comporter de la smectite (Smectite, Bentonite, Montmorillonites), de la kaolinite, et/ou de l'illite.

Selon un mode plus préféré, une composition pour liant ou un liant de construction selon l'invention peut comporter de la kaolinite, et/ou de l'illite.

Le type d'argile peut être déterminé par les méthodes connues de la personne du métier par exemple après préparations spécifiques des échantillons selon la méthode dite des lames orientées (cf. Thiry et al. - 2013 - Technique de préparation des minéraux argileux en vue de l'analyse par diffraction des Rayons X et introduction à l'interprétation des diagrammes). En particulier, il sera possible d'utiliser de la diffractométrie des rayons X. Par exemple, les conditions suivantes peuvent être utilisées :

- Appareillage : Diffractomètre, par exemple un BRUKER D8 ADVANCE® (Géométrie Bragg-Brentano) ; par exemple présentant les réglages suivants : Tube au Cuivre ($\lambda$ K$\alpha$1 $\approx$ 1.54 Å) Puissance du générateur : 40 kV, 40 mA ; Optiques primaires : fente fixe 0.16° ; fente de Soller 2.5° ; Optique secondaire : fente de Soller 2.5° ; Détecteur LynXeye XE-T®
- Paramètres d'acquisition : Balayage de 4 à 90°2$\theta$ ; Vitesse de balayage de 0,03°2$\theta$/seconde, Temps de comptage : 480 secondes par pas ; Echantillon tournant.

La présente invention est particulièrement adaptée pour certaines matrices argileuses. En effet, au sein de la diversité de matrices argileuses, les inventeurs ont identifié les caractéristiques des matrices argileuses se combinant au mieux avec un polymère défloculant comportant des monomères contenant un noyau mélamine.

La matrice argileuse crue peut présenter une valeur de LOI (Loss on ignition en terminologie anglosaxonne, qui correspondant à la perte de masse lors d'une combustion) supérieure ou égale à 8 %. De préférence, la matrice argileuse crue présente une valeur de LOI supérieure ou égale à 10 %, de façon plus préférée supérieure ou égale à 12%, de façon encore plus préférée supérieure ou égale à %. La valeur de LOI peut être calculée en utilisant l'équation suivante :

$$LOI\ (\%) = \frac{m_f - m_i}{m_i}$$

ou

$m_i$ représente la masse initiale de l'échantillon de matrice argileuse crue avant effet de la température (entre 550°C et 1000°C)

$m_f$ représente la masse finale de l'échantillon de matrice argileuse crue après effet de la température (entre 550°C et 1000°C), pare exemple utilisation de la norme ASTM D7348-21.

La matrice argileuse crue peut présenter une quantité de CaO supérieure ou égale à 2%. De préférence, la matrice argileuse crue présente une quantité de CaO supérieure ou égale à 4%, de façon plus préférée supérieure ou égale à 6%, de façon encore plus préférée supérieure ou égale à 8%, par exemple supérieure ou égale à 10%. La quantité de CaO peut être mesurée par exemple par diffraction de rayons X, spectrométrie par fluorescence X ou spectrométrie

d'absorption atomique.

La matrice argileuse crue peut présenter une quantité de $K_2O$ inférieure ou égale à 5%. De préférence, la matrice argileuse crue présente une quantité de $K_2O$ inférieure ou égale à 3%, de façon plus préférée inférieure ou égale à 2%, de façon encore plus préférée inférieure ou égale à 1.5%. La quantité de $K_2O$ peut être mesurée par exemple par diffraction de rayons X, spectrométrie par fluorescence X ou spectrométrie d'absorption atomique.

La matrice argileuse crue peut présenter une quantité de $Na_2O$ inférieure ou égale à 2%. De préférence, la matrice argileuse crue présente une quantité de $Na_2O$ inférieure ou égale à 1,5%, de façon plus préférée inférieure ou égale à 1%, de façon encore plus préférée inférieure ou égale à 0.5%. La quantité de $Na_2O$ est par exemple mesurée par diffraction de rayons X, spectrométrie par fluorescence X ou spectrométrie d'absorption atomique.

La matrice argileuse crue peut présenter une quantité de $SiO_2$ supérieure ou égale à 30%. De préférence, la matrice argileuse crue présente une quantité de $SiO_2$ supérieure ou égale à 35%, de façon plus préférée supérieure ou égale à 40%, de façon encore plus préférée supérieure ou égale à 45%, par exemple supérieure ou égale à 48%. La quantité de $SiO_2$ est par exemple mesurée par diffraction de rayons X, spectrométrie par fluorescence X ou spectrométrie d'absorption atomique.

La matrice argileuse crue peut, de façon préférée, correspondre au moins en partie à une terre argileuse excavée, de préférence une terre argileuse excavée non calcinée, telle qu'une terre argileuse excavée crue traitée. La matrice argileuse crue peut avantageusement avoir été traitée, ledit traitement étant sélectionné parmi : broyage, triage, tamisage et/ou séchage. De préférence, la matrice argileuse crue utilisée dans la composition pour liant ou dans le liant a été broyée.

Avantageusement, la matrice argileuse crue comporte de l'argile crue broyée. De façon préférée, la matrice argileuse crue peut présenter une D50 inférieure ou égale à 500 $\mu$m, de préférence inférieure ou égale à 250 $\mu$m, de façon plus préférée inférieure ou égale à 100 $\mu$m ou de façon encore plus préférée inférieure ou égale à 50 $\mu$m, de manière plus préférée inférieure à 45 $\mu$m.

En outre, la matrice argileuse crue peut présenter une D50 supérieure ou égale à 5 $\mu$m, de préférence supérieure ou égale à 10 $\mu$m, de façon plus préférée supérieure ou égale à 15 $\mu$m ou de façon encore plus préférée supérieure ou égale à 20 $\mu$m, de manière plus préférée, supérieure à 40 $\mu$m. Cela permet de limiter les contraintes sur les outils productifs industriels dédiés au broyage.

De façon plus préférée, la matrice argileuse crue peut présenter une D50 comprise entre 10 $\mu$m et 500 $\mu$m, de préférence comprise entre 15 $\mu$m et 250 $\mu$m, de façon plus préférée comprise entre 20 $\mu$m et 150 $\mu$m ou de façon encore plus préférée comprise entre 20 $\mu$m et 50 $\mu$m. La présence d'une argile broyée de façon à atteindre de tels diamètres peut permettre d'améliorer la performance du liant de construction et du matériau de construction selon l'invention.

Avantageusement, la matrice argileuse crue peut comporter au moins 2 % en poids de particules de limon, de préférence au moins 4 % en poids, de façon plus préférée au moins 6 % en poids. Par exemple, la matrice argileuse crue peut comporter au plus 50 % en poids de particules de limon, de préférence au plus 30 % en poids, de façon plus préférée au plus 20 % en poids. Par exemple, la matrice argileuse crue peut comporter de 2 % à 50 % en poids de particules de limon, de préférence de 4 % à 30 % en poids, de façon plus préférée de 6 % à 20 % en poids. Les particules de limon sont en particulier à des particules présentant un diamètre compris entre 2 $\mu$m et 63 $\mu$m (borne incluse).

La matrice argileuse crue peut comporter au moins 1 % en poids de sable, de préférence au moins 2 % en poids, de façon plus préférée au moins 3 % en poids. Par exemple, la matrice argileuse crue peut comporter au plus 70 % en poids de sable, de préférence au plus 50 % en poids, de façon plus préférée au plus 40 % en poids. Par exemple, la matrice argileuse crue peut comporter de 1 % à 70 % en poids de particules de sable, de préférence de 2 % à 50 % en poids, de façon plus préférée de 3 % à 40 % en poids. Le sable correspond en particulier à des particules présentant un diamètre compris entre 63 $\mu$m (borne exclue) et 2 mm.

De façon préférée, la matrice argileuse crue comporte des teneurs en argile au sens minéralogique du terme d'au moins 10 % en poids sec, de façon plus préférée d'au moins 20 % en poids sec, et de façon encore plus préférée d'au moins 30 % en poids sec. Toutefois, une matrice argileuse crue comportant de faibles teneurs en argiles au sens minéralogique peut être utilisée. En particulier, la matrice argileuse crue peut correspondre à des fines argilos calcaires ou argilo siliceuse/quartzeuse comportant au moins 50 % en poids sec de calcaire, silice et/ou quartz, de préférence au moins 60%, de façon plus préférée au moins 70% ou de façon encore plus préférée au moins 80 % en poids sec de calcaire, silice et/ou quartz. La teneur de ces composés est mesurée par diffraction des rayons X.

Avantageusement, la matrice argileuse crue utilisée présentera une humidité inférieure à 10%, de préférence inférieure à 8%, de façon plus préférée inférieure à 6% et de façon encore plus préférée inférieure à 4%. Toutefois, de façon préférée, la matrice argileuse crue utilisée présentera une humidité supérieure à 2%. L'humidité de la matrice argileuse peut être mesurée telle que décrit dans la norme ISO 12570:2000. Succinctement, la détermination du taux d'humidité est réalisée par séchage à chaud (analyse thermogravimétrique).

Comme cela a été mentionné, dans le cadre de la présente invention, la composition pour liant de construction comporte avantageusement au moins 5 % en poids de matrice(s) argileuse(s) crue(s). Par exemple, une composition pour liant selon l'invention peut comporter au moins 10 % en poids de matrice argileuse crue, de préférence au moins 15 % en

poids de matrice argileuse crue, de façon plus préférée au moins 20 % en poids de matrice argileuse crue, de façon encore plus préférée au moins 25 % en poids de matrice argileuse crue.

Une composition pour liant de construction selon l'invention peut comporter de 5 % à 80 % en poids de matrice(s) argileuse(s) crue(s), de préférence de 10 % à 70 % en poids, de façon plus préférée de 15 % à 60 % en poids et de façon encore plus préférée de 20 % à 50 % en poids.

Toutefois, dans un mode de réalisation, la composition pour liant de construction peut comporter au moins 80 % en poids de matrice(s) argileuse(s) crue(s). Par exemple, une composition pour liant selon l'invention peut comporter au moins 85 % en poids de matrice argileuse crue, de préférence au moins 90 % en poids de matrice argileuse crue, de façon plus préférée au moins 94 % en poids de matrice argileuse crue, de façon encore plus préférée au moins 96 % en poids de matrice argileuse crue par rapport au poids sec de la composition.

## Polymère défloculant comportant des monomères contenant un noyau mélamine

La présence d'un ou de plusieurs polymères défloculant(s) comportant des noyaux mélamine formant au moins une partie de la chaine principale dudit polymère défloculant peut améliorer les performances du liant de construction et finalement d'un matériau de construction fabriqué à partir de ce liant.

En particulier, comme cela est illustré dans les exemples, l'utilisation d'un polymère défloculant selon l'invention, comportant des monomères contenant un noyau mélamine, ledit polymère défloculant présentant une chaîne principale comportant des noyaux mélamine liés entre eux par des liaisons covalentes ; autrement formulé, la chaine principale est formée d'une séquence répétitive où les noyaux mélamine sont liés entre eux par des liaisons covalentes, permet notamment d'améliorer les propriétés mécaniques obtenues, notamment la Rc à 1j et à 28j.

En outre, la présence d'un ou de plusieurs polymères défloculants comportant des monomères contenant un noyau mélamine peut permettre de réduire le retrait observé sur les matériaux de construction ; En particulier le retrait à 90 jours.

En particulier, le polymère défloculant selon l'invention peut avoir été formé notamment à partir de monomère comportant un groupement mélamine, de préférence à partir de monomère comportant un groupement mélamine formant au moins une partie de la chaine principale dudit polymère défloculant. Ainsi, le polymère défloculant présente une chaîne principale formée d'une séquence répétitive où les noyaux mélamine sont liés entre eux par des liaisons covalentes. Ce polymère défloculant est de préférence constitué principalement de monomères de mélamine qui sont interconnectés principalement via des liaisons covalentes formées par exemple par réaction de condensation avec le formaldéhyde. Ces liaisons impliquent la formation de ponts méthylènes ($-CH_2-$) ou méthoxyméthylènes ($-CH_2OCH_3$) entre les noyaux de mélamine.

Le polymère défloculant selon l'invention, comportant des monomères contenant un noyau mélamine, ledit polymère défloculant présentant une chaîne principale formée d'une séquence répétitive où les noyaux mélamine sont liés entre eux par des liaisons covalentes.

En particulier, le polymère défloculant selon l'invention, comportant des monomères contenant un noyau mélamine, peut comporter des groupements sulfonate et de préférence des groupements mélamine sulphonate. Par exemple, le polymère défloculant comportant des groupements mélamine peut avoir été formé notamment à partir de monomère comportant un groupement mélamine sulfonate. De préférence, ledit polymère peut comporter une structure selon la formule suivante :

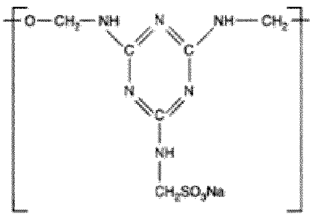

Dans le cadre de l'invention, le polymère défloculant utilisé, comportant des monomères contenant un noyau mélamine, présente une masse moléculaire moyenne (« weight-average molecular weight » en terminologie anglosaxonne) d'au moins 2 000 g/mol, de préférence d'au moins 9 000 g/mol, de façon plus préférée au moins 14 000 g/mol et de façon encore plus préférée d'au moins 22 000 g/mol. En effet, les inventeurs ont montré qu'alors qu'il a été suggéré dans l'état de la technique d'intégrer dans des liants de construction des polymères ou molécules organiques de petite taille. Ici, en présence d'argile crue, le polymère défloculant comportant des noyau mélamine formant au moins une partie de la chaine principale dudit polymère défloculant présente de préférence des masses moléculaires élevées pour améliorer les propriétés du matériau de construction fabriqué. C'est particulièrement le cas lorsque le polymère défloculant est un polymère de Mélamine Formaldéhyde Sulfofonctionnalisé.

La masse moléculaire moyenne des polymères défloculants utilisés dans le cadre de l'invention peut par exemple être mesurée selon la norme ISO 16014:2019.

Avantageusement, le polymère défloculant comportant des monomères contenant un noyau mélamine présente, à un pH supérieur ou égale à 7, des groupements chargés négativement. Comme cela est illustré dans les exemples, le polymère défloculant comportant des monomères contenant un noyau mélamine présente, à un pH supérieur ou égale à 8, au moins 3 groupements chargés, de préférence au moins 3 groupements anioniques. De façon préférée, le polymère défloculant présente, à un pH supérieur ou égale à 8, au moins 10 groupements anioniques, de façon plus préférée au moins 15 groupements anioniques, et de façon encore plus préférée au moins 20 groupements anioniques.

Le nombre de groupements chargés à un pH donné pour un polymère défloculant utilisé dans le cadre de l'invention peut être déterminé à partir de la formule chimique connue du polymère défloculant et des pKa connus des groupements le constituant.

En outre, le polymère défloculant comportant des monomères contenant un noyau mélamine peut présenter un rapport entre sa masse moléculaire moyenne (en g/mol) et son nombre de groupements anioniques, inférieur ou égal à 2000. De préférence, il présente un rapport entre sa masse moléculaire moyenne (en g/mol) et son nombre de groupements anioniques, inférieur ou égal à 1800, de façon plus préférée inférieure ou égal à 1600 et de façon encore plus préférée inférieure ou égal à 1400. Cela permet d'améliorer les propriétés mécaniques du matériau de construction fabriqué.

En outre, le polymère défloculant comportant des monomères contenant un noyau mélamine peut présenter un rapport entre sa masse moléculaire et son nombre de groupements anioniques supérieur ou égale à 200. De préférence, il présente un rapport entre sa masse moléculaire moyenne (en g/mol) et son nombre de groupements anioniques, supérieur ou égal à 400, de façon plus préférée inférieure ou égal à 600 et de façon encore plus préférée inférieure ou égal à 800. Cela permet d'améliorer les propriétés mécaniques du matériau de construction fabriqué. Cela est particulièrement marqué lorsqu'un polymère de Mélamine Formaldéhyde Sulfofonctionnalisé est utilisé.

En outre, le polymère défloculant comportant des monomères contenant un noyau mélamine peut présenter un indice de polydispersité inférieur à 5, de préférence inférieur à 4, de façon plus préférée inférieur à 3 et de façon encore plus préférée inférieure à 2. Cela permet d'améliorer les propriétés mécaniques du matériau de construction fabriqué.

De façon préférée, le polymère défloculant utilisé comporte une chaine principale formée principalement de noyaux mélamine. En particulier, la chaine principale est formée à 80% en masse moléculaire de groupement mélamine. De façon plus préférée, la chaine principale comporte au moins 10 groupements ou noyaux mélamine, de façon encore plus préférée au moins 15 groupements ou noyaux mélamine.

Il est illustré dans les exemples que la présence de groupements de type mélamine sulfonate améliore significativement le comportement de l'argile crue dans un liant de construction et en particulier dans une composition pour liant de construction.

Le polymère défloculant comportant des monomères contenant un noyau mélamine, peut également comporter une ou plusieurs chaines latérales qui peuvent améliorer son comportement en présence d'argile crue.

Ainsi, le polymère défloculant comportant des monomères contenant un noyau mélamine peut comporter en outre, une ou plusieurs chaines latérales comportant :

- une ou plusieurs ramifications ou
- une ou plusieurs insaturations, de préférence une ou plusieurs fonctions alcènes.

En particulier, le polymère défloculant peut comporter une ou plusieurs chaines poly(oxyéthylène) ou poly(oxypropylène). De façon préférée, ces chaines poly(oxyéthylène) et poly(oxypropylène) présentent une masse moléculaire d'au moins 200 g/mol. Ces chaines latérales peuvent présenter une masse moléculaire d'au moins 300 g/mol, par exemple d'au moins 500 g/mol.

Le polymère défloculant comportant des monomères contenant un noyau mélamine peut être un copolymère formé à partir d'au moins deux monomères différents. Au moins un des au moins deux monomères différents comporte un groupement mélamine, de préférence au moins un groupement mélamine sulfonate.

Il est en outre préférable de maitriser le nombre de chaines latérales non chargées. Par exemple, le polymère défloculant présente un rapport entre un nombre de fonction sulfonate (par exemple porté par une mélamine sulfonate) sur un nombre de chaines latérales non chargées d'au moins 2:1, de préférence d'au moins 3:1, de façon plus préférée d'au moins 4:1, de façon encore plus préférée d'au moins 5 :1.

L'agent défloculant est de préférence utilisé sous forme d'un sel. Cependant, l'invention ne saurait se limiter aux agents défloculant cités précédemment ou leurs sels. Tout type d'agent défloculant organique connu par l'homme du métier peut être utilisé en lieu et place desdits agents défloculants cités précédemment.

Les défloculants utilisables selon la présente invention peuvent prendre une forme solide ou une forme liquide. Avantageusement, le ou les moyens de mesure sont configurés pour ajouter juste la bonne quantité d'adjuvant en fonction

de la matrice argileuse crue utilisée et en particulier en fonction des valeurs de caractéristiques de la matrice argileuse crue mesurées.

Bien que la composition selon l'invention comporte un polymère défloculant comportant des monomères contenant un noyau mélamine, elle ne se limite pas à cette seule présence et elle peut comporter plusieurs polymères défloculants comportant des groupements mélamine, comme par exemple, sans y être limité, à des groupements mélamines sulfonates d'une part mais aussi d'autres polymères défloculants, d'autres polymères ou encore d'autres molécules organiques.

Ainsi, de façon préférée, la composition selon l'invention comporte plusieurs polymères défloculants.

En particulier, la composition selon l'invention comporte de préférence au plus 3 % en poids de polymère défloculant comportant des monomères contenant un noyau mélamine par rapport au poids sec de la matrice argileuse crue, de façon préférée au plus 2,5 % en poids sec, de façon plus préférée au plus 2 % en poids sec et de façon encore plus préférée au plus 1,5 % en poids sec ou au plus 1% en poids sec.

Le ou les polymères défloculants comportant des monomères contenant un noyau mélamine peut représenter au moins 0,1 % en poids sec de la matrice argileuse. De façon préférée, l'agent défloculant représente au moins 0,15 % en poids sec de la matrice argileuse. De façon plus préférée, l'agent défloculant représente au moins 0,2 % en poids sec de la matrice argileuse. De façon encore plus préférée, l'agent défloculant représente au moins 0,5% en poids sec de la matrice argileuse.

## AUTRES CONSTITUANTS DE LA COMPOSITION POUR LIANT DE CONSTRUCTION

La composition pour liant selon l'invention peut comporter, outre une matrice argileuse et un polymère défloculant : un ou plusieurs précurseurs, un ou plusieurs activateurs une ou plusieurs charges, et un ou plusieurs additifs tels que des agents entraîneurs d'air, des retardateurs, des accélérateurs, des adjuvants réduisant le retrait, et/ou des adjuvants modificateurs de viscosité.

En particulier, la composition pour liant selon l'invention peut comporter un ou plusieurs précurseurs, un ou plusieurs activateurs et un ou plusieurs additifs.

Ainsi, selon **un autre aspect,** l'invention porte sur un **liant de construction** susceptible d'être obtenu à partir d'une composition selon l'invention. En particulier, elle porte sur un liant de construction obtenu à partir d'une composition selon l'invention.

Un liant de construction selon l'invention comporte en particulier une matrice argileuse crue et un polymère défloculant comportant des monomères contenant un noyau mélamine, ledit polymère défloculant présentant une chaîne principale comportant des noyaux mélamine liés entre eux par des liaisons covalentes ; autrement formulé, la chaine principale est formée d'une séquence répétitive où les noyaux mélamine sont liés entre eux par des liaisons covalentes. Le liant selon l'invention présente, comme cela a été mentionné, des propriétés mécaniques améliorées.

En outre, le liant selon l'invention comporte avantageusement au moins 10 % en poids sec de matrice argileuse crue par rapport au poids sec de la composition.

Avantageusement, le liant selon l'invention peut comporter en outre au moins un précurseur, au moins un activateur et/ou de l'eau.

Généralement, un liant de construction peut comporter en outre de l'eau. En particulier, un liant de construction selon l'invention présente un ratio massique E/C inférieur ou égale à 0,5.

Ainsi, avantageusement, un liant de construction selon l'invention comporte un ou plusieurs polymères défloculant(s) comportant des monomères contenant un noyau mélamine, ledit polymère défloculant présentant une chaîne principale comportant des noyaux mélamine liés entre eux par des liaisons covalentes ; autrement formulé, la chaine principale est formée d'une séquence répétitive où les noyaux mélamine sont liés entre eux par des liaisons covalentes et au moins 5 % en poids sec de matrice argileuse crue.

Alternativement, un liant de construction selon l'invention peut comporter au moins 11 % en poids sec de matrice argileuse crue, de préférence au moins 15 % en poids sec de matrice argileuse crue, de façon plus préférée au moins 20 % en poids sec de matrice argileuse crue, de façon encore plus préférée au moins 25 % en poids sec de matrice argileuse crue.

Un liant de construction selon l'invention peut comporter au plus 80 % en poids sec de matrice argileuse crue, de préférence au plus 70 % en poids sec de matrice argileuse crue, de façon plus préférée au plus 60 % en poids sec de matrice argileuse crue, de façon encore plus préférée au plus 50 % en poids sec de matrice argileuse crue.

Généralement un liant de construction selon l'invention peut comporter de 11 % à 80 % en poids sec de matrice argileuse crue, de préférence de 15 % à 70 % en poids sec de matrice argileuse crue, de façon plus préférée de 20 % à 60 % en poids sec de matrice argileuse crue, de façon encore plus préférée de 25 % à 50 % en poids sec de matrice argileuse crue, par rapport au poids sec du liant de construction.

Ci-après seront détaillés des modes de réalisation préférés ou non des matières premières pouvant être mise en oeuvre dans le cadre de plusieurs aspects de la présente invention.

## Précurseur

Un liant de construction selon la présente invention peut comporter au moins un précurseur. De préférence, un liant de construction peut comporter au moins deux précurseurs différents. En particulier, il peut comporter au moins une matrice argileuse calcinée. En outre, il peut comporter une matrice argileuse calcinée ainsi qu'un autre précurseur.

Un liant de construction selon la présente invention peut comporter au moins 5 % en poids de précurseur(s), de préférence au moins 10 % en poids de précurseur(s), de façon plus préférée au moins 15 % en poids de précurseur(s), de façon encore plus préférée au moins 20 % en poids de précurseur(s), par rapport au poids sec de liant de construction.

Un liant de construction selon la présente invention peut comporter au plus 40 % en poids de précurseur(s), de préférence au plus 35 % en poids de précurseur(s), de façon plus préférée au plus 30% en poids de précurseur(s), de façon encore plus préférée au plus 32,5 % en poids de précurseur(s), par rapport au poids sec de liant de construction.

Généralement, un liant de construction selon la présente invention comporte de 5 % à 40 % en poids de précurseur(s), de préférence de 10 % à 35 % en poids de précurseur(s), de façon plus préférée de 15 % à 30 % en poids de précurseur(s), de façon encore plus préférée de 20 % à 32,5 % en poids de précurseur(s), par rapport au poids sec de liant de construction.

Par exemple, un liant de construction selon l'invention peut comporter au moins 2 % en poids de matrice argileuse calcinée, de préférence au moins 3 % en poids de matrice argileuse calcinée, de façon plus préférée au moins 4 % en poids de matrice argileuse calcinée par rapport au poids sec du liant de construction.

Un liant de construction selon la présente invention peut comporter au plus 20 % en poids de matrice argileuse calcinée, de préférence au plus 15 % en poids de matrice argileuse calcinée, de façon plus préférée au plus 12,5 % en poids de matrice argileuse calcinée, de façon encore plus préférée au plus 10 % en poids de matrice argileuse calcinée, par rapport au poids sec du liant de construction.

Généralement, un liant de construction selon la présente invention comporte de 2 % à 20 % en poids de matrice argileuse calcinée, de préférence de 3 % à 15 % en poids de matrice argileuse calcinée, de façon plus préférée de 4% à 12,5% en poids de matrice argileuse calcinée, de façon encore plus préférée de 4 % à 10 % en poids de matrice argileuse calcinée, par rapport au poids sec du liant de construction.

Il existe de nombreuses méthodes pour préparer une matrice argileuse calcinée et il peut exister de nombreuses matrices argileuses calcinées différentes. De façon générale, une matrice argileuse calcinée aura subi une étape de calcination à une température d'au moins 500 °C, de préférence d'au moins 600°C. La calcination peut être une calcination naturelle telle que pour une matrice argileuse calcinée issue d'une roche pouzzolanique naturelle. Cette matrice argileuse calcinée a généralement été formée à partir de projections basaltiques volcaniques ou de composition proche. Toutefois, de façon préférée, la calcination est une calcination anthropogène. La calcination peut être une calcination dite flash réalisée sur une durée inférieure à une heure, de préférence inférieure à une minute et de façon plus préférée inférieure à une seconde (e.g. généralement moins d'une seconde à proximité d'une source de chaleur à plus de 900°C après une montée initiale en température). Alternativement, le traitement thermique peut être réalisé durant plusieurs heures (e.g. au moins 3 heures, de préférence au moins 4 heures). Les traitements thermiques peuvent être réalisés dans des fours rotatifs, des fours à vis, des tours de calcination. Avantageusement les moyens de calcination utilisés sont alimentés par des énergies décarbonées et/ou ont fait l'objet d'un rétrofit par exemple 100 % électrique. En outre, la calcination peut être suivie d'une étape de refroidissement par exemple une étape de refroidissement d'au moins 3°C par minute. Ce refroidissement peut par exemple être réalisé sous la forme d'une trempe. De manière préférée, la matière argileuse calcinée est au moins partiellement déshydroxylée. Ainsi, la structure sous forme de feuillets à l'état crue est au moins partiellement détruite conduisant à une structure désorganisée voir amorphe. En outre, elle présente une activité pouzzolanique. En particulier, le traitement thermique de type flash peut augmenter les défauts de surface des cristallites et ainsi accroît le nombre de sites réactifs. La matrice argileuse calcinée peut être formée avec toutes les matrices argileuses déjà mentionnées ci-dessus. De préférence, la matrice argileuse crue qui a été calcinée comportait de la kaolinite, de la montmorillonite et/ou de l'illite. Ainsi, de préférence, la matrice argileuse calcinée comporte du metakaolin, de la metamontmorillonite ou de la metaillite.

Un précurseur peut par exemple comporter des laitiers tels que des laitiers de hauts fourneaux, des laitiers d'aciérie ou des laitiers de cubilots, des cendres volcaniques, des cendres volantes, de la fumée de silice, des cendres de matières végétales telles que des cendres de riz, des résidus de bauxite, des fillers calcaires tels que des fillers calcaires micronisés, des fillers siliceux, des fillers siliceux micronisés tels que de la poudre de verre, de la vatérite synthétique, des terres de diatomée (e.g. diatomites), des scories broyées ou leurs combinaisons. En particulier des laitiers d'aciérie peuvent être des laitiers d'aciérie électrique ou des laitiers d'aciérie de convertisseur à oxygène.

De façon préférée, le précurseur comporte des laitiers tels que des laitiers de hauts fourneaux, des laitiers d'aciérie, ou des laitiers de cubilot. De façon plus préférée, le précurseur consiste en des laitiers tels que des laitiers de hauts fourneaux, des laitiers d'aciérie, ou des laitiers de cubilot.

De façon préférée, le précurseur comporte des scories de procédé d'extraction ou de recyclage de lithium.

De manière préférée, le filler calcaire comporte un calcaire naturel principalement constitué de carbonate de

calcium avec différents polymorphes, tel que de la calcite, vatérite et/ou de l'aragonite, mais pouvant contenir également une certaine quantité de carbonate de magnésium et/ou de dolomite. Le filler calcaire peut également être une marne naturelle.

Un précurseur peut en particulier être une composition comportant au moins 30 % en poids sec de carbonate, carbonate de calcium ou de potassium, de préférence au moins 30 % en poids sec de carbonate de calcium ; de façon plus préférée au moins 50 % en poids sec de carbonate de calcium ; de façon encore plus préférée au moins 70 % en poids sec de carbonate de calcium. Dans ce mode de réalisation, le précurseur est de préférence un précurseur issu de la synthèse chimique. Le carbonate de calcium est de préférence sous forme de vatérite. Par exemple, le carbonate de calcium peut ainsi comprendre au moins 10 % en poids de vatérite ; ou au moins 20 % en poids de vatérite ; ou au moins 30 % en poids de vatérite ; ou au moins 40 % en poids de vatérite ; ou au moins 50 % en poids de vatérite ; ou au moins 60 % en poids de vatérite ; ou au moins 70 % en poids de vatérite ; ou au moins 80 % en poids de vatérite ; ou au moins 90 % en poids de vatérite ; ou au moins 95 % en poids de vatérite ; ou au moins 99 % en poids de vatérite. La vatérite en présence d'eau, forme de l'aragonite. La vatérite peut être obtenue par tout type de méthode connue de l'homme du métier.

En particulier, le précurseur peut être un filler calcaire micronisés. C'est-à-dire qu'il comporte du carbonate de calcium sous forme de particules inférieures à 100 $\mu$m. Avantageusement, le précurseur comporte du carbonate de calcium présent, par exemple sous forme de vatérite, sous forme de particules présentant une valeur de D50 inférieur ou égale à 25 $\mu$m, de préférence inférieur ou égale à 15 $\mu$m, de façon plus préférée inférieur ou égale à 10 $\mu$m et de façon encore plus préférée inférieur ou égale à 5 $\mu$m. La mesure de D50 peut être réalisée par toute méthode conventionnelle de détermination de la taille des particules, telle que, mais sans s'y limiter, la diffusion laser multi-détecteur ou la diffraction laser ou le tamisage. De préférence, la mesure de D50 est réalisée selon la norme ISO 13320 :2020.

**Activateur**

Un liant de construction selon la présente invention peut comporter au moins un activateur.

Avantageusement, l'au moins un activateur peut être sélectionné parmi une composition d'activation alcaline. La composition d'activation alcaline peut comporter de préférence au moins une base, telle qu'une base faible et/ou une base forte. La composition d'activation alcaline peut de préférence comporter un ou plusieurs composés présentant un pKa supérieur ou égal à 8, de façon plus préférée supérieur ou égal à 10, de façon plus préférée supérieur ou égal à 12, de façon encore plus préférée supérieur ou égal à 14. La composition d'activation peut être ou peut comporter de la chaux, des carbonates, du ciment tel que du ciment Portland CEM I, du ciment composé (CEM II), du ciment de haut fourneau (CEM III/A), du ciment sursulfaté ou ettringitique, du ciment alumineux et du ciment composé (CEM V/A) conformes aux normes NF EN 197-1 et NF EN 197-4 ou encore au ciment à maçonner (MC) conforme à la norme NF EN 413-1.

Le ou les activateurs utilisés dans un liant de construction selon la présente invention peut comporter du clinker, des silicates, des carbonates, des sulfates, du gypse (ou ses formes déshydratées bassanite et anhydrite), des hydroxydes, des lactates, des organophosphorés, de la chaux et leurs combinaisons.

Un liant de construction selon la présente invention peut comporter au moins 10% en poids d'activateur(s) ; de préférence au moins 15 % en poids d'activateur(s) ; de préférence au moins 20 % en poids d'activateur(s), de préférence au moins 25 % en poids d'activateur(s), de façon plus préférée au moins 30 % en poids d'activateur(s), de façon encore plus préférée au moins 35 % en poids d'activateur(s) par rapport au poids sec de liant de construction.

Un liant de construction selon la présente invention peut comporter au plus 60 % en poids d'activateur(s), de préférence au plus 55 % en poids d'activateur(s), de façon plus préférée au plus 50 % en poids d'activateur(s), de façon encore plus préférée au plus 45 % en poids d'activateur(s). En particulier, il peut comporter au plus 40 % en poids d'activateur(s) et de façon plus préférée au plus 35 % en poids d'activateur(s), par rapport au poids sec de liant de construction. Par exemple, il peut comporter au plus 30 % en poids d'activateur(s) par rapport au poids sec de liant de construction.

Généralement, un liant de construction selon la présente invention peut comporter de 10 % à 60 % en poids d'activateur(s), de préférence de 15 % à 55 % en poids d'activateur(s), de façon plus préférée de 20 % à 50 % en poids d'activateur(s), de façon encore plus préférée de 25 % à 45 % en poids d'activateur(s), par rapport au poids sec de liant de construction.

En particulier, un liant de construction selon la présente invention peut comporter au plus 50 % en poids de clinker par rapport au poids sec du liant de construction, de préférence au plus 45 % en poids de clinker par rapport au poids sec du liant de construction, de façon plus préférée, au plus 40 % en poids de clinker par rapport au poids sec du liant de construction, de façon encore plus préférée, au plus 35 % en poids de clinker par rapport au poids sec du liant de construction. Le clinker peut avantageusement être combiné à du gypse pour former l'activateur. Le clinker peut être utilisé sous une forme moulue ou micronisée.

La présence de clinker peut être bénéfique aux propriétés mécaniques du matériau de construction produit avec le liant construction. Ainsi, le liant de construction selon la présente invention peut comporter au moins 10 % en poids de clinker par rapport au poids sec du liant de construction, de préférence au moins 15 % en poids de clinker par rapport au

poids sec du liant de construction, de façon plus préférée, au moins 20 % en poids de clinker par rapport au poids sec du liant de construction, de façon encore plus préférée, au moins 25 % en poids de clinker par rapport au poids sec du liant de construction. Par exemple, au moins 30 % en poids de clinker par rapport au poids sec du liant de construction.

Par exemple, le liant de construction selon la présente invention peut comporter de 10 % à 55 % en poids de clinker par rapport au poids sec du liant de construction, de préférence de 15 % à 50 % en poids de clinker par rapport au poids sec du liant de construction, de façon plus préférée, de 20 % à 45 % en poids de clinker par rapport au poids sec du liant de construction, de façon encore plus préférée, de 25 % à 40 % en poids de clinker par rapport au poids sec du liant de construction. Le clinker peut avantageusement être combiné à du gypse pour former l'activateur.

Un précurseur et un activateur utilisé dans le cadre de l'invention peuvent être de préférence des composés différents. Toutefois, le ou les précurseur(s) et activateur(s) peuvent être ajoutés à une composition pour former le liant de construction sous la forme d'un seul mélange comportant les précurseur(s) et activateur(s). C'est par exemple le cas lors de l'utilisation de CEM II, CEM III, CEM IV ou CEM V.

Par exemple, le liant de construction peut comporter d'autres additifs organiques par exemple sélectionné parmi des alcanolamines, glycols, glycérol, sucres, acides de sucre, acides carboxyliques ou leurs sels, polymères superabsorbants, ou leur mélange.

Par exemple, les alcanolamines utilisés selon l'invention peuvent être sélectionnés parmi la monoéthanolamine, la diéthanolamine, la triéthanolamine (TEA), la diéthanolisopropanolamine (DEIPA), l'éthanoldiisopropanolamine (EDIPA), l'isopropanolamine, la diisopropanolamine, la triisopropanolamine (TIPA), la N-méthyldiisopropanolamine (MDIPA), la N-méthyldiéthanolamine (MDEA), la tétrahydroxyéthyléthylènediamine (THEED) la tétrahydroxyisopropyléthylènediamine (THIPD), ainsi que des mélanges de deux ou plus de ces alcanolamines.

De façon préférée, les alcanolamines utilisés selon l'invention peuvent être sélectionnés parmi : la triisopropanolamine (TIPA), la N-méthyldiisopropanolamine (MDIPA), la N-méthyldiéthanolamine (MDEA), la tétrahydroxyéthyléthylènediamine (THEED), la diéthanolisopropanolamine (DEIPA), la tétrahydroxyisopropyléthylènediamine (THIPD), ainsi que des mélanges de deux ou plus de ces alcanolamines.

De façon plus préférée, un additif organique peut comporter en outre des alcanolamines sélectionné parmi triethanolamines telles que triisopropanolamine (TIPA), triethanolamine (TEA), et/ou diethanolisopropanolamine (DEIPA).

Des exemples de glycols appropriés pour l'additif organique sont le monoéthylèneglycol, le diéthylèneglycol, le triéthylèneglycol, le tétraéthylèneglycol, le pentaéthylèneglycol, le polyéthylèneglycol (e.g. PEG 200), le néopentylglycol, le hexylèneglycol, le propylèneglycol, le dipropylèneglycol et le polypropylèneglycol. Il est également possible d'utiliser des mélanges de deux ou plusieurs glycols différents ainsi que d'au moins un glycol et du glycérol.

Des exemples de sucres susceptibles d'être incorporés à l'additif organique utilisé lors du broyage incluent des monosaccharides et des disaccharides. Parmi les exemples appropriés, on peut citer l'allose, l'altrose, l'arabinose, la cellobiose, la chitobiose, le fructose, le galactose, le glucose, le glycéraldéhyde, le gulose, l'idose, l'isomaltose, le lactose, le lactulose, le lyxose, le maltose, la mannobiose, le mannose, le palatinose, le raffinose, le ribose, le saccharose, le sorbose, le tallose, le thréose, le tréhalose, le xylose, la xylobiose, ainsi que leurs mélanges.

Dans le contexte de la présente invention, un "acide de sucre" est un monosaccharide possédant un groupe carboxyle. Des exemples d'acides de sucre utiles dans le cadre de la présente invention incluent, sans s'y limiter, l'acide ascorbique, l'acide galacturonique, l'acide gluconique, l'acide glucuronique, l'acide glycérique, l'acide iduronique, l'acide mucique, l'acide neuraminique, l'acide saccharique, l'acide tartrique et l'acide xylonique. L'acide de sucre peut se présenter sous forme d'acide libre ou de sel.

Les acides carboxyliques pouvant être utilisés dans l'additif organique en combinaison avec le polymère défloculant et particulièrement préférés sont l'acide oxalique, l'acide malonique, l'acide adipique, l'acide lactique, l'acide citrique et l'acide tartrique. L'acide carboxylique peut se présenter sous forme d'acide libre ou sous forme de sel.

Selon des modes de réalisation, les sels d'acides de sucre et/ou les sels d'acide carboxylique peuvent être des sels avec des métaux des groupes la, Ila, Ib, Ilb, IVb, VIIIb du tableau périodique des éléments. Les sels préférés d'acides de sucre et/ou les sels d'acide carboxylique sont des sels de métaux alcalins, de métaux alcalino-terreux, de fer, de cobalt, de cuivre ou de zinc.

Des exemples de polymères superabsorbants utiles dans le contexte de la présente invention incluent, sans s'y limiter, des polymères naturels tels que l'amidon, la cellulose (y compris l'éther de cellulose), la chitine ou le collagène, les alginates, et des polymères synthétiques tels que le poly(méthacrylate d'hydroxyéthyle), le poly(éthylène glycol) ou le poly(oxyde d'éthylène) ou des polymères synthétiques ioniques tels que l'acide polyacrylique (PAA), l'acide polyméthacrylique (PMAA), les polyacrylamides (PAM), l'acide polylactique (PLA), le polyéthylèneimine, l'alcool polyvinylique (PVA) ou le polyvinylpyrrolidone.

Les polymères superabsorbants particulièrement adaptés dans le cadre de la présente invention sont des polymères superabsorbants ioniques, en particulier ceux à base de polyacrylamide modifié avec de l'acide acrylique, qui peuvent être de structure linéaire ou réticulée.

Ainsi, selon **un autre aspect,** l'invention porte sur un **matériau de construction** obtenu à partir d'une

composition selon l'invention et plus particulièrement d'un liant de construction selon l'invention.

En particulier, la présente invention porte sur un matériau de construction caractérisé en ce qu'il comporte une matrice argileuse crue et un polymère défloculant comportant des monomères contenant un noyau mélamine, ledit polymère défloculant présentant une chaîne principale formée d'une séquence répétitive où les noyaux mélamine sont liés entre eux par des liaisons covalentes.

De préférence, le matériau de construction comporte au moins 10 % en poids sec de matrice argileuse crue par rapport au poids sec du liant de construction et au plus 0.5 % en poids de polymère défloculant comportant des monomères contenant un noyau mélamine, ledit polymère défloculant présentant une chaîne principale comportant des noyaux mélamine liés entre eux par des liaisons covalentes ; autrement formulé, la chaine principale est formée d'une séquence répétitive où les noyaux mélamine sont liés entre eux par des liaisons covalentes, par rapport au poids sec de la matrice argileuse crue.

## Granulats

Un matériau de construction selon la présente invention peut comporter des granulats.

Classiquement les granulats peuvent correspondre à des granulats naturels, des granulats artificiels ou encore à des granulats recyclés.

Les granulats peuvent en outre comporter des granulats minéraux, c'est-à-dire principalement constitués de matière minérale et/ou des granulats végétaux, c'est-à-dire principalement constitués de matière d'origine végétale. Les granulats peuvent aussi comporter des granulats marins, c'est-à-dire principalement constitués de matière organique ou inorganique provenant des fonds marins telles que des granulats siliceux et/ou des substances calcaires (e.g. maërl et sables coquilliers).

Les granulats minéraux peuvent par exemple correspondent à du sable, des gravillons, des graviers, des fillers (ou matériaux fins), des poudres, déchets fossilisés et à leur combinaison.

Les granulats végétaux peuvent par exemple correspondre à du bois (copeaux ou fibres), du chanvre, de la paille, de la chènevotte de chanvre, du miscanthus, du tournesol, du typha, du maïs, du lin, des balles de riz, des balles de blé, du colza, des algues, du bambou, la ouate de cellulose, du tissu défibré et à leur combinaison

En particulier, lorsque le matériau de construction selon l'invention comporte des granulats végétaux, ledit matériau comporte de préférence au moins 0,1 % en poids de granulats végétaux, de préférence au moins 0,2 % en poids de granulats végétaux, de façon plus préférée au moins 0,5% en poids de granulats végétaux, et de façon encore plus préférée au moins 0,7% en poids de granulats végétaux.

Selon **un autre aspect,** l'invention porte sur un **procédé de fabrication 100 d'une composition pour liant de construction selon l'invention.**

Dans certains cas le liant de construction sera directement assemblé dans un matériau de construction. Dans d'autres utilisations, une composition pour liant de construction peut être préparée extemporanément.

Le procédé de fabrication 100 selon l'invention peut être mis en oeuvre avec des dispositifs ou systèmes habituellement utilisés pour la fabrication de liant de construction ou de matériaux de construction.

Comme illustré à la **figure 1,** le procédé de fabrication 100 selon l'invention comporte une étape de mélange 130 d'une matrice argileuse crue avec un polymère défloculant comportant des monomères contenant un noyau mélamine, ledit polymère défloculant présentant une chaîne principale formée d'une séquence répétitive où les noyaux mélamine sont liés entre eux par des liaisons covalentes.

En outre, le procédé de fabrication 100 peut comporter les étapes suivantes : une étape d'acquisition 110 de valeurs de caractéristiques de la matrice argileuse crue, une étape de traitement 120 de la matrice argileuse crue, une étape d'ajout d'additifs 140.

Le procédé de fabrication 100 selon l'invention peut comporter une étape **d'acquisition 110 de valeurs de caractéristiques de la matrice argileuse crue.** Une étape d'analyse 110 peut mettre en oeuvre un analyseur. Un analyseur peut être sélectionné parmi : un spectromètre (infrarouge, RMN, Raman, Fluorescence X, de masse), un diffractomètre à rayon X, un microscope (à transmission, à balayage), et/ou d'autres capteurs optiques. En particulier, cette étape peut comporter une mesure de la valeur de LOI et/ou des teneurs en $Al_2O_3$, CaO, $Fe_2O_3$, $K_2O$, MgO, $Na_2O$, $SiO_2$, $SO_3$, $TiO_2$ dans la matrice argileuse crue. En particulier, cela peut comporter une mesure des teneurs en CaO, $K_2O$, et/ou $Na_2O$ dans la matrice argileuse crue ou encore en une mesure de la valeur de LOI de la matrice argileuse crue.

L'étape de mesure 110 peut également comporter l'utilisation de méthodes classiques d'étude de la distribution particulaire. Elles peuvent comporter l'utilisation de tamis et de sédimentation (e.g. hygromètre, méthode à la pipette) et être réalisée par exemple en suivant les indications de la norme ASTM D422-63, ASTM D6913-04, ISO 13320:2020, NF X31-107 et éventuellement la norme NF EN 933-1.

L'étape d'acquisition 110 peut être suivie d'une étape d'adaptation de la quantité de polymère défloculant utilisé

ou de sa structure moléculaire. Cela permet généralement d'améliorer la performance du liant de construction produit en prenant en compte les caractéristiques de la matrice argileuse crue. Cela peut permettre d'augmenter la résistance mécanique du liant de construction produit.

Comme illustré à la figure 1, le procédé de fabrication 100 selon l'invention peut comporter une **étape de traitement 120 de la matrice argileuse crue.**

Comme illustré à la [Fig.1], le procédé de fabrication 100 selon l'invention peut comporter une étape de traitement 120 de la matrice argileuse crue. En particulier, l'étape de traitement 120 de la matrice argileuse crue peut comporter une modification des teneurs des différentes fractions granulométriques de la matrice argileuse crue.

L'étape de traitement 120 permet généralement de préparer la matière première de façon à ce que le liant de construction présente une durée de cure réduite et des performances mécaniques améliorées.

En particulier, la matrice argileuse crue peut avantageusement avoir été prétraitée. De préférence, le prétraitement est sélectionné parmi : broyage, triage, tamisage et/ou séchage de la matrice argileuse. De préférence, le prétraitement est sélectionné parmi : broyage, triage, tamisage et/ou séchage de la matrice argileuse crue. Le prétraitement peut par exemple comporter un fractionnement.

L'étape de traitement 120 peut être réalisée généralement avec des démotteurs, sécheurs, cribles, et/ou broyeurs.

Le séchage peut notamment permettre une réduction du taux d'humidité de la matrice argileuse crue sans réaliser de montée en température supérieure à 500°C. Le sécheur peut, par exemple, être sélectionné parmi un sécheur rotatif.

La matrice argileuse crue séchée peut avantageusement subir une étape de criblage par exemple au sein d'un crible. Cette étape permettra de préférence d'éliminer les granulats présentant un diamètre supérieur ou égal à 2 cm, de façon plus préférée un diamètre supérieur ou égal à 1 cm. Le crible peut être, par exemple, sélectionné parmi un crible rotatif.

Le broyage peut par exemple être réalisé grâce à un broyeur à marteaux, un broyeur à boulets ou encore un broyeur à barres. Comme cela sera détaillé, le broyage peut être réalisé de façon à contrôler la D50 des matières utilisées.

De façon préférée, lors de la formation de la composition pour liant de construction, la matrice argileuse crue peut présenter une D50 inférieure ou égale à 200 $\mu$m, de préférence inférieure ou égale à 150 $\mu$m, de façon plus préférée inférieure ou égale à 100 $\mu$m, de façon encore plus préférée inférieure ou égale à 80 $\mu$m.

Un procédé de fabrication 100 selon l'invention comporte une **étape de mélange 130 d'une matrice argileuse crue avec un polymère défloculant** comportant des monomères contenant un noyau mélamine, ledit polymère défloculant présentant une chaîne principale comportant des noyaux mélamine liés entre eux par des liaisons covalentes ; autrement formulé, la chaine principale est formée d'une séquence répétitive où les noyaux mélamine sont liés entre eux par des liaisons covalentes.

En particulier, cette étape de mélange 130 peut être réalisée quelques instants avant l'utilisation de la composition pour liant de construction et son mélange aux autres constituants du liant de construction. Alternativement, l'étape de mélange 130 peut être réalisée bien avant, et la composition pour liant de construction ainsi fabriquée est conservé à l'état sec pour être mélangé ultérieurement avec d'autres composants du liant de construction ou des granulats. De façon préférée, le procédé selon l'invention utilise une composition pour liant fabriqué extemporanément. Alternativement, le procédé selon l'invention utilise un liant fabriqué au moins 6 heures, de préférence au moins 24 heures avant son utilisation et par exemple sur un autre site.

L'étape de mélange 130 peut être réalisée généralement avec un organe de mélange tel un malaxeur ou un mélangeur, par exemple un mélangeur à poudre.

En particulier, comme cela détaillé par la suite, l'étape de mélange 130 peut comporter l'utilisation de trémies, de moyen(s) de pesage, de moyen de dosage volumétrique, de moyens de transport tels que des vis sans fin et/ou des systèmes aérauliques, de mélangeur et/ou de malaxeur.

L'étape de mélange 130 est généralement réalisée sur une durée suffisante pour créer un mélange intime entre les différents constituants de la composition pour liant. Les paramétrages pour arriver à un tel résultat peuvent varier en fonction des constituants du liant.

L'étape de mélange 130 peut comporter un mélange des constituants de la composition pour liant pendant au moins 5 secondes, de préférence pendant au moins 10 secondes, de façon plus préférée pendant au moins 20 secondes et de façon encore plus préférée pendant au moins 30 secondes. Le mélange se fera généralement sur une durée inférieure ou égale à 20 minutes, de préférence pendant au plus 15 minutes, de façon plus préférée pendant au plus 10 minutes et de façon encore plus préférée pendant au plus 5 minutes.

En particulier, l'étape de mélange 130 peut être réalisée en plusieurs sous-étapes. Par exemple, dans un premier temps, le procédé de mélange 130 peut comporter un pré-mélange d'une matrice argileuse crue et d'une composition d'activation, de préférence une composition d'activation alcaline. En outre, lors de ce pré-mélange, le procédé selon l'invention peut avantageusement comporter l'ajout d'une composition d'oxydes métalliques calcinée. De préférence, ce prémélange n'est pas hydraté. Enfin, le polymère défloculant selon l'invention, comportant des monomères contenant un

noyau mélamine, ledit polymère défloculant présentant une chaîne principale formée d'une séquence répétitive où les noyaux mélamine sont liés entre eux par des liaisons covalentes, peut être ajouté par exemple sous forme de poudre. Alternativement, le procédé de mélange 230 peut comporter un pré-mélange d'une matrice argileuse crue et d'une composition d'activation, de préférence une composition d'activation alcaline avant l'ajout du polymère défloculant.

Un procédé de fabrication 100 selon l'invention comporte une **étape d'ajout d'additifs 140.** Les additifs sont par exemple ceux décrits en lien avec la composition pour liant de construction.

Selon **un autre aspect,** l'invention porte sur un **procédé de fabrication 200 d'un matériau de construction selon l'invention.**

Le procédé de fabrication 200 selon l'invention peut être mis en oeuvre avec des dispositifs ou systèmes habituellement utilisés pour la fabrication de liant de construction ou de matériaux de construction.

Comme illustré à la **figure 2,** le procédé de fabrication 200 d'un matériau de construction selon l'invention comporte les étapes suivantes : une étape de formation du liant de construction 210 et une étape d'ajout 230 de granulats.

En outre, le procédé de fabrication 200 d'un matériau de construction selon l'invention peut comporter une étape d'ajout 220 d'eau.

L'étape de formation du liant de construction 210 peut être réalisée à partir de la composition pour liant de construction. Alternativement, la composition pour liant de construction peut être fabriquée au moment de la formation du liant de construction.

## EXEMPLES

L'invention est décrite plus en détail ci-après en référence aux exemples expérimentaux suivants. Ces exemples sont fournis à des fins d'illustration uniquement et ne sont pas destinés à être limitatifs, sauf indication contraire. Ainsi, l'invention ne doit en aucun cas être interprétée comme étant limitée aux exemples illustratifs suivants, mais doit plutôt être interprétée comme englobant toutes les variations qui deviennent évidentes à la suite de l'enseignement fourni ici.

Polymère défloculant comparatifs

A des fins de comparaison, des polymères comparatifs disponibles commercialement sont utilisés.

En particulier, les polymères suivants peuvent être utilisés :

- A : β-naphthalene sulfonate formaldehyde n° CAS : 9084-06-4
- B : Poly(AMPS), n° CAS : 27119-07-9
- C : Poly(sodium 4-styrenesulfonate) n° CAS: 28210-41-5 - MW75000
- D : Polymère de type PCE (Polycarboxylate) - MW75000

En fonction de leur propriétés physicochimiques ces polymères comparatifs sont dilués dans un solvant adapté ou utilisé à l'état déshydraté.

Synthèse de polymères comparatifs PCE

Les polymères de type PCE (Polycarboxylate) synthétisés sont composés d'une chaîne principale portant des fonctions carboxylates $-COO^-$ et sur laquelle peuvent être greffées des chaînes secondaires de type polyéthylène glycol.

Les polycarboxylates PCE sont synthétisés par une polymérisation radicalaire à partir de monomères acryliques tels que de l'acide acrylique et un ester méthacrylique de poly(éthylène glycol) méthoxy. Classiquement, la synthèse comprend trois étapes différentes : initiation, propagation et terminaison. La réaction radicalaire est initiée à partir d'un radical libre, appelé initiateur, lequel réagit avec un acide acrylique pour former un radical acrylique. Dans un ballon est mélangé l'acide acrylique avec un peroxyde (initiateur). Lors de la propagation, le radical acrylique libre réagit avec un autre monomère pour former un radical dimère, lequel réagit à nouveau avec un monomère pour former un radical trimère, et ainsi de suite. Lors de la terminaison, la réaction en chaîne de polymérisation est interrompue au moyen d'un régulateur.

Synthèse de polymères défloculant comportant des noyaux mélamine formant la chaine principale (PMS)

Les polymères défloculant comportant des groupements mélamine peuvent être formés par condensation entre le formaldéhyde et une mélamine substituée ou non. Cela permet de former un polymère défloculant comportant une chaine principale formée par un enchainement de groupements ou noyaux mélamine.

En particulier, les polymères défloculant comportant des monomères contenant un noyau mélamine, ledit

polymère défloculant présentant une chaîne principale formée d'une séquence répétitive où les noyaux mélamine sont liés entre eux par des liaisons covalentes, peuvent être formés par condensation entre le formaldéhyde et des mélamines au travers de trois étapes :

- Fixation de fonctions méthoxyle $-CH_2OH$ sur les fonctions amine $-NH_2$ de la mélamine par réaction avec le formaldéhyde en milieu alcalin. De préférence, à pH 8-10 ;
- Fixation des sulfonates. Elle est réalisée par addition du bisulfite de sodium en milieu alcalin. La sulfonation d'un seul des groupements méthoxyle se produit lors de l'ajout d'une mole de sulfonate par mole de mélamine à pH=10 ;
- Polymérisation par condensation. La condensation peut être interrompue pour un degré de polymérisation n compris entre 4 et 25 soit une masse moléculaire moyenne de 2 000 à 25 000 $g.mol^{-1}$. La condensation est réalisée de préférence à pH 5-6 et 80°C suivi d'une neutralisation par exemple par l'ajout de NaOH de façon à générer un mélange de polymères défloculant présentant un pH légèrement basique.

Caractérisation de la matrice argileuse

La matrice argileuse crue est analysée par Fluorescence-X selon les indications des normes NF EN 196-2 et NF EN 15309

Les essais de fluorescences X sur perles ou pastilles compressées sont réalisés afin de définir la composition chimique d'un échantillon, c'est-à-dire de quantifier ses éléments majeurs et éventuellement ses éléments Traces. Les échantillons analysés présentent une granulométrie < 1 mm et sont séchés. La matrice argileuse séchée est conditionnée sous la forme d'une perle ou d'une pastille.

Les résultats obtenus en pourcentage d'oxides concernent les éléments majeurs : Al, Ca, Cr, Fe, K, Mg, Na, P, Pb, Si, Ti, V et W. La perte au feu (LOI) mesurée pendant la confection des échantillons permet de prédire la présence potentielle de matières organiques, carbonates et/ou sulfates, qui sont des éléments pouvant être impactant.

Préparation de la matrice argileuse

La matrice argileuse est criblée et tamisée à 10 mm. La matrice argileuse est ensuite broyée par exemple par un broyeur à lames à 1200 rpm. Les éléments supérieurs à 2 mm sont retirés.

L'humidité de l'argile est mesurée telle que décrit dans la norme ISO 12570:2000.

De façon à illustrer l'effet des typologies de matrice argileuses sur les propriétés mécaniques des liants de constructions, deux matrices argileuses (A1 et A2) sont utilisées et leurs propriétés (en %) sont présentées dans le tableau 2 ci-dessous.

[TABLEAU 2]

| Matrice Argileuse | LOI | $Al_2O_3$ | CaO | $Fe_2O_3$ | $K_2O$ | MgO | $Na_2O$ | $SiO_2$ | $SO_3$ | $TiO_2$ |
|---|---|---|---|---|---|---|---|---|---|---|
| A1 | 7,89 | 11,7 | 6,1 | 10,2 | 1,89 | 6,5 | 2,03 | 49,05 | 3,4 | 1,24 |
| A2 | 12,12 | 9,4 | 10,1 | 7,3 | 1,56 | 4,33 | 1,24 | 48,51 | 4,5 | 0,94 |

Méthodologie de mesure des propriétés mécaniques des liants de construction

Les liants de construction décrits dans le tableau 2 ci-dessus sont préparés en éprouvette et leur résistance mécanique est mesurée à différents temps.

On entend par résistance mécanique d'une éprouvette, sa résistance à la compression, une telle compression étant mesurée selon la norme NF EN 771-3+A1/CN et est exprimée en Méga Pascal (MPa).

Calcul du retrait

Le retrait est calculé selon la norme d'essai ciment issue de la NF EN 197-1, méthode classique pour les ciments, et réalisée sur mortier normalisé.

Préparation d'une composition pour liant de construction

Un prémélange à sec est réalisé entre une matrice argileuse crue préparée et un polymère défloculant selon l'invention dans des quantités prédéterminées.

Préparation d'un liant de construction puis d'un matériau pour liant de construction

La composition de type pré-mélange décrite ci-dessus est combinée dans un malaxeur avec un laitier de hauts fourneaux et un activateur (e.g. clinker) et de l'eau. Les mélanges sont réalisés de telle sorte que le liant de construction comporte 40% en poids de matrice argileuse crue préparée ; 25 % en poids de laitiers de hauts fourneaux ; 35% en poids CEM I (mélange à 95% de clinker et 5% de gypse en moyenne)

Alternativement, la préparation de la composition est directement suivie par la préparation du liant. Dans ce cas, un prémélange à sec est réalisé entre une matrice argileuse crue préparée et un polymère défloculant selon l'invention dans des quantités prédéterminées, puis le laitier, le CEM I/ciment Portland et l'eau sont ajoutés.

L'ensemble est mélangé à basse vitesse, c'est-à-dire sensiblement à soixante tours par minute pendant trente secondes. Ensuite, du sable est ajouté et le tout est mélangé à plus grande vitesse, c'est-à-dire à environ 120 tours par minute pendant une minute. Le rapport massique eau sur matières sèches du liant de construction est ajusté à une valeur comprise entre 0,4 et 0,6. Dans un exemple particulier, le matériau de construction, un mortier, comporte 25% en poids de liant, 75 % en poids de sable ; ce mélange étant complété par de l'eau pour un rapport massique eau sur matières sèches du liant ajusté à une valeur de 0,45.

Le mortier à base du liant de construction ainsi fabriqué est ensuite coulé dans un moule puis laissé à maturation à température ambiante, c'est-à-dire environ 20 degrés Celsius pendant vingt-huit jours dans l'eau. Alternativement, le mortier peut être coulé dans un moule puis laissé à maturation pendant moins de vingt-quatre heures dans une étape de cure, à température ambiante, c'est-à-dire environ 25 degrés Celsius ou de préférence sous traitement thermique. Lors de cette étape de cure, le moule peut être rendu hermétique ou la couche supérieure du matériau de construction peut être recouverte d'un produit de cure pour en limiter/empêcher l'évaporation.

Le tableau 3 ci-dessous présente, pour différentes formulations de liants de construction dont six formulations comparatives (REFO, REF1, REF2, REF3, REF4, REF5) et trois formulations selon l'invention (D1, D2, D3).

[Tableau 3]

| Nom de la composition | Polymère | Quantité de polymère défloculant | Matrice argileuse crue utilisée |
|---|---|---|---|
| REF0 - A1 | na (pas de polymère défloculant) | 0% | A1 |
| REF0 - A2 | na (pas de polymère défloculant) | 0% | A2 |
| REF1 - A1 | A - Poly naphthalene sulfonate | 3% | A1 |
| REF2 - A1 | B - Poly(AMPS) | 3% | A1 |
| REF3 - A1 | C - Poly(sodium 4-styrenesulfonate) | 3% | A1 |
| REF4 - A1 | D - PCE | 3% | A1 |
| REF5 - A1 | PMS - 500 g/mol | 3% | A1 |
| REF1 - A2 | A - Poly naphthalene sulfonate | 3% | A2 |
| REF2 - A2 | B - Poly(AMPS) | 3% | A2 |
| REF3 - A2 | C - Poly(sodium 4-styrenesulfonate) | 3% | A2 |
| REF4 - A2 | D - PCE | 3% | A2 |
| REF5 - A2 | PMS - 500 g/mol | 3% | A2 |
| D1 - A1 | PMS - 6 000 g/mol | 3% | A1 |
| D2 - A2 | PMS - 9 000 g/mol | 3% | A2 |
| D3 - A1 | PMS - 2 000 g/mol | 3% | A1 |
| D3 - A2 | PMS - 2 000 g/mol | 3% | A2 |

Méthodologie de mesure des propriétés mécaniques des liants de construction :

Une fois la maturation terminée, la résistance mécanique est mesurée. On entend par résistance mécanique d'un liant de construction, sa résistance à la compression, une telle compression étant mesurée selon la norme NF EN 196-1, pour un prisme de 40 millimètres de côté et 160 millimètres de longueur et est exprimée en Méga Pascal (MPa).

Comparaison des liants de construction selon l'invention aux liants de construction connus

Le tableau 4 ci-dessous présente les résultats des résistances mécaniques à 1 jour et à 28 jours ainsi que le retrait à 90j en fonction des formulations détaillées en tableau 2.

[Tableau 4]

| ***ID*** | ***Rc 1j*** *(MPa)* | ***Rc 28j*** *(MPa)* | ***Retrait 90j*** *(μm/m)* |
|---|---|---|---|
| *REF0 - A1* | <10 | <25 | *< -2200* |
| *REF1 - A1* | *<12* | *25<X<45* | *> -2200 & <-2000* |
| *REF2 - A1* | *<12* | *25<X<45* | *> -2200 & <-2000* |
| *REF3 - A1* | *<12* | *25<X<45* | *> -2200 & <-2000* |
| *REF4 - A1* | *<12* | *25<X<45* | *> -2200 & <-2000* |
| *REF5 - A1* | *<12* | *35<X<45* | *> -2200 & <-2000* |
| ***D1- A1*** | **>12** | **>45** | > **-1800** |
| ***D3- A1*** | **>12** | **>45** | **> -2000** |
| *REF0 - A2* | *<10* | *<20* | *< -2800* |
| *REF1 - A2* | *<10* | *20<X<35* | *> -2800 & <-2000* |
| *REF2 - A2* | *<10* | *20<X<35* | *> -2800 & <-2000* |
| *REF3 - A2* | *<10* | *20<X<35* | *> -2800 & <-2000* |
| *REF4 - A2* | *<10* | *20<X<35* | *> -2800 & <-2000* |
| *REF5 - A2* | *<10* | *30<X<35* | *> -2800 & <-2000* |
| ***D2 - A2*** | **>12** | **>50** | **>-1000** |
| ***D3- A2*** | **>12** | **>45** | **>-2000** |

Si l'on compare les propriétés mécaniques du matériau de construction préparé en absence de défloculant (REFO) et en présence de défloculant (REF1, REF2, REF3, REF4, REF5, D1, D2, D3, D4), le tableau 4 ci-dessus illustre que la présence des défloculants testés (surtout pour les références D1, D2, D3) apporte une amélioration pour les deux argiles testées (A1 et A2) principalement à 28 jours.

La comparaison des défloculants D1, D2, D3, en comparaison des autres références, montrent des propriétés mécaniques améliorées à 1 et 28j.

En particulier, le tableau 4 illustre l'effet positif de la masse moléculaire du défloculant sur les performances mécaniques. Ainsi outre le choix spécifique de la présence de noyau mélamine affectant la structure et le comportement du polymère défloculant, le tableau 4 illustre l'importance de masse moléculaires minimales pour ce polymère particulier.

La comparaison des performances des défloculants en fonction des argiles illustre que le défloculant 2 (D2) permet d'améliorer les propriétés mécaniques du matériau de construction pour l'argile 2.

L'amélioration apportée par le défloculant 2 est particulièrement forte sur l'argile 2. En effet, alors que les défloculants de références ne sont que peu efficaces pour l'argile 2, le défloculant selon l'invention permet de produire, en combinaison avec l'argile 2, un matériau de construction ayant de très bonnes propriétés mécaniques.

En outre, les défloculants D1, D2 et D3, présentent un retrait à 90j inférieur aux autres formulations.

L'étude des formulations selon la présente invention illustre que l'utilisation combinée d'une matrice argileuse crue avec un défloculant à base de mélanime permet de d'atteindre des valeurs de résistance mécanique à 28 jours supérieure à 45 MPa tout en maintenant un retrait à 90j inférieur à 1800 mm (pour les argiles A1 et A2).

L'invention peut faire l'objet de nombreuses variantes et applications autres que celles décrites ci-dessus. En particulier, sauf indication contraire, les différentes caractéristiques structurelles et fonctionnelles de chacune des mises en œuvre décrite ci-dessus ne doivent pas être considérées comme combinées et/ou étroitement et/ou inextricablement liées les unes aux autres, mais au contraire comme de simples juxtapositions. En outre, les caractéristiques structurelles et/ou fonctionnelles des différents modes de réalisation décrits ci-dessus peuvent faire l'objet en tout ou partie de toute juxtaposition différente ou de toute combinaison différente.

## Revendications

**1.** Composition pour liant de construction comportant une matrice argileuse crue et un polymère défloculant comportant des monomères contenant un noyau mélamine, ledit polymère défloculant présentant une chaîne principale comportant des noyaux mélamine liés entre eux par des liaisons covalentes et le polymère défloculant présentant

une masse moléculaire d'au moins 2 000 g/mol.

2. Composition pour liant de construction selon la revendication 1, **caractérisée en ce qu'**elle comporte au moins 10 % en poids sec de matrice argileuse crue par rapport au poids sec de la composition.

3. Composition pour liant de construction selon l'une quelconque des revendications 1 ou 2, **caractérisée en ce que** le polymère défloculant comporte des groupements sulfonate, de préférence des noyaux mélamine étant substitués par un ou plusieurs groupements sulfonate.

4. Composition pour liant de construction selon l'une quelconque des revendications 1 à 3, **caractérisée en ce que** la matrice argileuse crue présente une valeur de LOI supérieure ou égale à 8 %.

5. Composition pour liant de construction selon l'une quelconque des revendications 1 à 4, **caractérisée en ce que** la matrice argileuse crue présente une quantité de CaO supérieure ou égale à 2 %.

6. Composition pour liant de construction selon l'une quelconque des revendications 1 à 5, **caractérisée en ce que** la matrice argileuse crue présente une quantité de $K_2O$ inférieure ou égale à 5 %.

7. Composition pour liant de construction selon l'une quelconque des revendications 1 à 6, **caractérisé en ce que** le polymère défloculant présente une masse moléculaire d'au moins 9 000 g/mol, de façon plus préférée au moins 14 000 g/mol et de façon encore plus préférée d'au moins 22 000 g/mol.

8. Composition pour liant de construction selon l'une quelconque des revendications 1 à 7, **caractérisé en ce que** le polymère défloculant présente, à un pH supérieur ou égale à 8, au moins 3 groupements chargés, de préférence au moins 3 groupements anioniques.

9. Composition pour liant de construction selon l'une quelconque des revendications 1 à 8, **caractérisé en ce que** le polymère défloculant présente un rapport masse moléculaire sur nombre de groupements anioniques inférieur ou égale à 2000.

10. Composition pour liant de construction selon l'une quelconque des revendications 1 à 9, **caractérisé en ce que** le polymère défloculant présente un rapport masse moléculaire sur nombre de groupements anioniques supérieur ou égale à 200.

11. Composition pour liant de construction selon l'une quelconque des revendications 1 à 10, **caractérisé en ce que** le polymère défloculant comporte une ou plusieurs chaines poly(oxyéthylène) ou poly(oxypropylène), la ou les chaines poly(oxyéthylène) ou poly(oxypropylène) présentant une masse moléculaire d'au moins 200 g/mol.

12. Composition pour liant de construction selon l'une quelconque des revendications 1 à 11, **caractérisé en ce qu'**elle est à l'état sec, par exemple elle présente une teneur en eau inférieure ou égale à 5 %.

13. Liant de construction fabriqué à partir d'une composition selon l'une quelconque des revendications 1 à 12.

14. Matériau de construction fabriqué à partir du liant de construction selon la revendication précédente.

15. Procédé de fabrication d'une composition pour liant de construction comportant une étape de mélange d'une matrice argileuse crue avec un polymère défloculant comportant des monomères contenant un noyau mélamine, ledit polymère défloculant présentant une chaîne principale comportant des noyaux mélamine liés entre eux par des liaisons covalentes et le polymère défloculant présentant une masse moléculaire d'au moins 2 000 g/mol.

[Fig. 1]

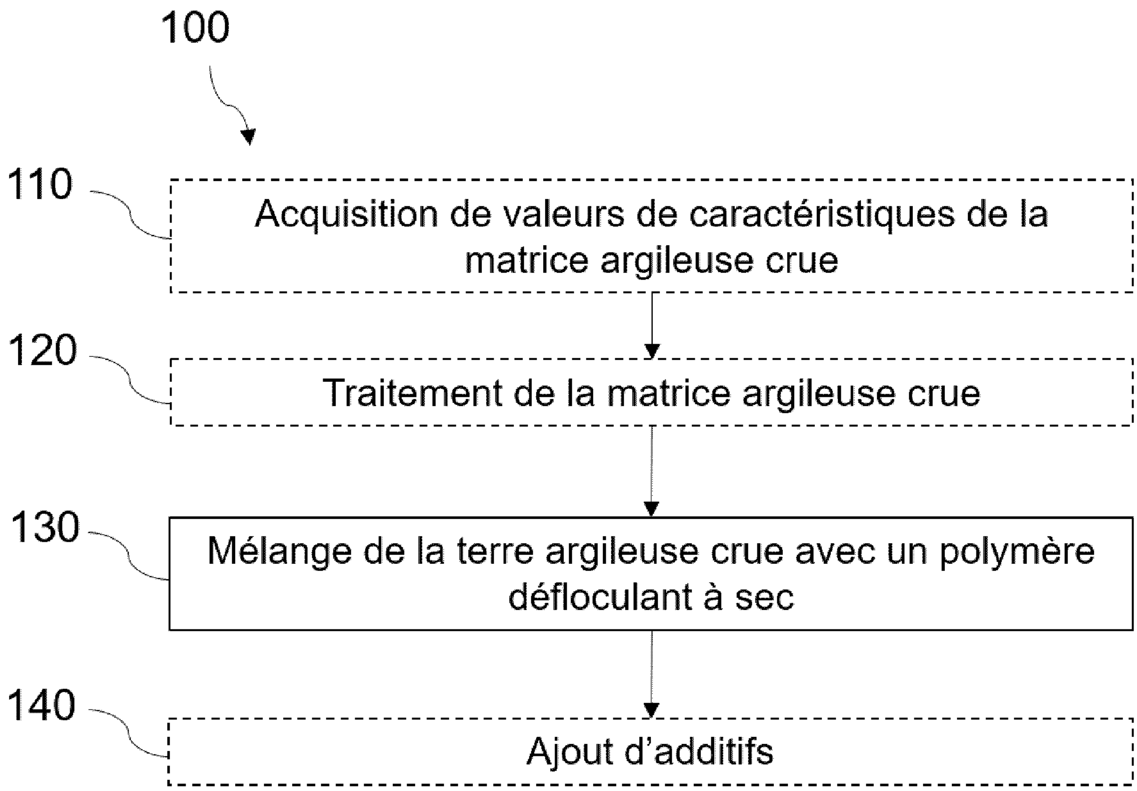
100
110
Acquisition de valeurs de caractéristiques de la matrice argileuse crue
120
Traitement de la matrice argileuse crue
130
Mélange de la terre argileuse crue avec un polymère défloculant à sec
140
Ajout d'additifs

[Fig. 2]

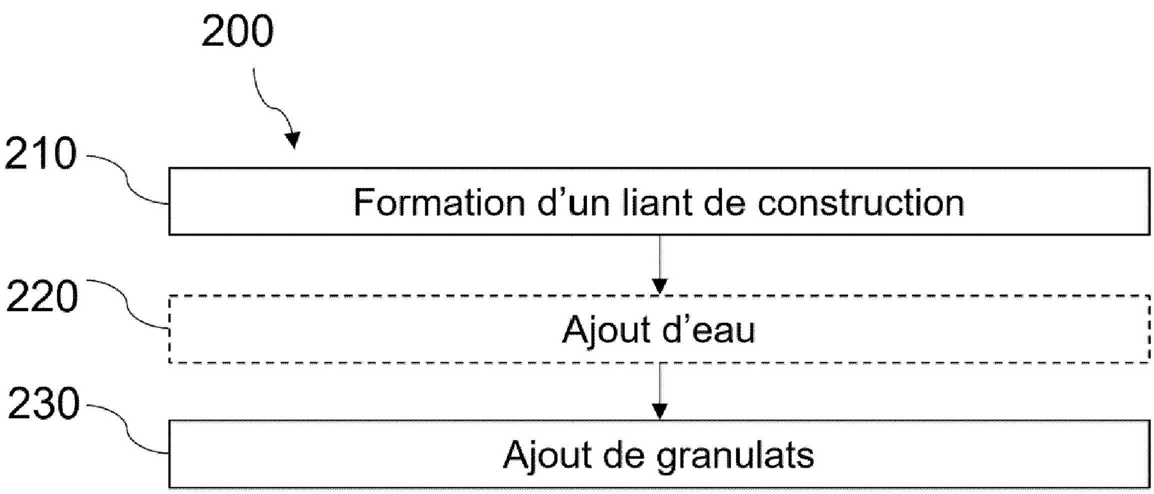
200
210
Formation d'un liant de construction
220
Ajout d'eau
230
Ajout de granulats

Europäisches Patentamt
European Patent Office
Office européen des brevets

# RAPPORT DE RECHERCHE EUROPEENNE

Numéro de la demande
EP 25 18 6087

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2008/087681 A2 (MILANO POLITECNICO [IT]; FORZATTI PIO [IT]; FERLAZZO NATALE [IT]) 24 juillet 2008 (2008-07-24)<br>* le document en entier *<br>----- | 1-15 | INV.<br>C04B28/04<br>C04B40/00 |
| X | DE 29 48 698 A1 (CEMPRO AG [LI])<br>11 juin 1981 (1981-06-11)<br>* le document en entier *<br>----- | 1-15 | |
| X | JP 2009 132557 A (TAIHEIYO MATERIAL KK)<br>18 juin 2009 (2009-06-18)<br>* alinéas [0011] - [0035]; revendications 1-3 *<br>----- | 1-15 | |
| X | CN 101 870 574 A (SHANDONG SANMU UNION DECORATIVE MATERIALS CO LTD)<br>27 octobre 2010 (2010-10-27)<br>* exemple 3 *<br>----- | 1-15 | |
| X | JP H07 64608 B2 (DENKI KAGAKU KOGYO KK)<br>12 juillet 1995 (1995-07-12)<br>* exemple 3 *<br>----- | 1-15 | DOMAINES TECHNIQUES RECHERCHES (IPC) |
| A | WO 2010/100230 A1 (BASF SE [DE]; NEHLS BENJAMIN [DE] ET AL.)<br>10 septembre 2010 (2010-09-10)<br>* le document en entier *<br>----- | 1-15 | C04B |
| A | DE 27 29 528 A1 (BRETAGNE METALLURG)<br>19 janvier 1978 (1978-01-19)<br>* le document en entier *<br>----- | 1-15 | |

Le présent rapport a été établi pour toutes les revendications

1

| Lieu de la recherche | Date d'achèvement de la recherche | Examinateur |
|---|---|---|
| Munich | 18 novembre 2025 | Gattinger, Irene |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................................................
& : membre de la même famille, document correspondant

EPO FORM 1503 03.82 (P04C02)

## ANNEXE AU RAPPORT DE RECHERCHE EUROPEENNE RELATIF A LA DEMANDE DE BREVET EUROPEEN NO.

EP 25 18 6087

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-11-2025

| Document brevet cité au rapport de recherche | Date de publication | Membre(s) de la famille de brevet(s) | Date de publication |
|---|---|---|---|
| WO 2008087681 A2 | 24-07-2008 | AUCUN | |
| DE 2948698 A1 | 11-06-1981 | BE 886500 A | 01-04-1981 |
| | | DE 2948698 A1 | 11-06-1981 |
| | | NL 8006621 A | 01-07-1981 |
| JP 2009132557 A | 18-06-2009 | AUCUN | |
| CN 101870574 A | 27-10-2010 | AUCUN | |
| JP H0764608 B2 | 12-07-1995 | JP H0753248 A | 28-02-1995 |
| | | JP H0764608 B2 | 12-07-1995 |
| WO 2010100230 A1 | 10-09-2010 | EP 2403913 A1 | 11-01-2012 |
| | | WO 2010100230 A1 | 10-09-2010 |
| DE 2729528 A1 | 19-01-1978 | BE 856767 A | 13-01-1978 |
| | | CA 1084644 A | 26-08-1980 |
| | | CH 622758 A5 | 30-04-1981 |
| | | DE 2729528 A1 | 19-01-1978 |
| | | DK 316977 A | 14-01-1978 |
| | | ES 460941 A1 | 01-08-1978 |
| | | FR 2358368 A1 | 10-02-1978 |
| | | GB 1584055 A | 04-02-1981 |
| | | IE 45252 B1 | 14-07-1982 |
| | | IT 1080206 B | 16-05-1985 |
| | | JP S539830 A | 28-01-1978 |
| | | JP S5817139 B2 | 05-04-1983 |
| | | LU 77729 A1 | 02-02-1978 |
| | | NL 7707701 A | 17-01-1978 |
| | | OA 05705 A | 31-05-1981 |
| | | PL 199528 A1 | 27-02-1978 |
| | | SE 426691 B | 07-02-1983 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 22157209 A
- EP 3932886 A
- WO 20178538 A
- WO 20141285 A

### Littérature non-brevet citée dans la description

- *CHEMICAL ABSTRACTS*, 9084-06-4
- *CHEMICAL ABSTRACTS*, 27119-07-9
- *CHEMICAL ABSTRACTS*, 28210-41-5